# EUROPÄISCHE PATENTSCHRIFT

(11) **EP 3 222 802 B1**
(45) Veröffentlichungstag und Bekanntmachung des Hinweises auf die Patenterteilung: **12.06.2019**
(21) Anmeldenummer: 17152772.4
(22) Anmeldetag: 24.01.2017
(51) Int. Cl.: E05B 79/20, E05B 83/40, E05B 85/12, E05B 79/22, F16C 1/12, F16C 1/16, F16C 1/18, E05C 17/60

(54) **BETÄTIGUNGSANORDNUNG FÜR EIN TÜRSCHLOSS EINER SCHIEBETÜR EINES KRAFTFAHRZEUGS**
ACTUATING ASSEMBLY FOR A DOOR LOCK OF A SLIDING DOOR OF A MOTOR VEHICLE
DISPOSITIF D'ACTIONNEMENT D'UNE SERRURE DE PORTE COULISSANTE D'UN VÉHICULE AUTOMOBILE

(30) Priorität: 24.03.2016 DE 102016105613; 24.06.2016 DE 102016111632
(43) Veröffentlichungstag der Anmeldung: 27.09.2017
(73) Patentinhaber: Huf Hülsbeck & Fürst GmbH & Co. KG, 42551 Velbert (DE)
(72) Erfinder: Torkowski, Thorsten, 45239 Essen (DE); Wietkamp, Stephan, 48161 Münster (DE); Koch, Andreas, 42579 Heiligenhaus (DE); Kiehl, Erik, 40878 Ratingen (DE)

(56) Entgegenhaltungen:
- WO-A1-2015/064471
- DE-A1-102007 025 359
- DE-T2- 60 115 367
- US-A1- 2008 001 412

## Beschreibung

Die Erfindung richtet sich auf eine Betätigungsanordnung für ein Türschloss einer Schiebetür eines Kraftfahrzeugs, aufweisend ein an der Schiebetür anbringbares Übertragungselement, welches an einer Drehachse drehfest angebracht ist, eine Betätigungshandhabe, die aus einer Ruhestellung durch Drehung in eine erste Drehrichtung in eine erste Betriebsstellung drehbar ist, und ein nach Art eines Bowdenzugs ausgebildetes und sich zumindest abschnittsweise in eine Längsrichtung erstreckendes Seilzugelement, welches ein erstes Längsende und ein zweites Längsende, das mit dem Türschloss der Schiebetür koppelbar ist, aufweist, wobei das Übertragungselement mit dem ersten Längsende des Seilzugelements derart bewegungsgekoppelt ist, dass eine rotatorische Drehbewegung der Betätigungshandhabe in die erste Drehrichtung das Seilzugelement translatorisch in Richtung der Drehachse in eine Betätigungsposition, in welcher das Seilzugelement auf das Türschloss einwirken kann, bewegt, wobei die Betätigungshandhabe aus der Ruhestellung durch Drehung in eine zweite Drehrichtung in eine zweite Betriebsstellung drehbar ist,wobei das Übertragungselement mit dem ersten Längsende des Seilzugelements derart bewegungsgekoppelt ist, dass eine rotatorische Drehbewegung der Betätigungshandhabe in die zweite Drehrichtung, die der ersten Drehrichtung entgegengesetzt ist, das Seilzugelement translatorisch in Richtung der Drehachse in die Betätigungsposition bewegt. Bei der Betätigungshandhabe handelt es sich um eine Innenbetätigungshandhabe, die im Inneren des Kraftfahrzeugs betätigt wird, um die Schiebetür zu öffnen oder zu schließen.

Aus dem Stand der Technik, siehe z.B. DE 10 2007 025 359 A1, DE 601 15 367 T2 oder US 2008/0001412 A1, sind Betätigungsanordnungen der eingangs bezeichneten Art mit Betätigungshandhaben bekannt, die von im Innenraum des Kraftfahrzeugs angeordneten Personen betätigt werden. Eine solche Betätigungshandhabe bzw. Innenbetätigungshandhabe einer Schiebetür kann in zwei Richtungen betätigt werden. Bei einer Betätigung der Betätigungshandhabe in eine erste Richtung zum Zuziehen der Schiebetür wird ein sogenannter Türfeststeller gelöst. Der Türfeststeller sorgt dafür, dass die Schiebetür immer in ungelöstem Zustand an ihrer Position gehalten wird und sich nicht - wie beispielsweise bei in Hanglage geparktem Fahrzeug - selbsttätig in eine Richtung bewegt und eine Person einklemmt. Eine Betätigung der Betätigungshandhabe in eine zweite Richtung erfolgt dann zum Öffnen des Türschlosses, um die Schiebtür aufschieben zu können. Die Betätigungshandhabe ist mit einem Antrieb gekoppelt, wobei die Betätigung durch den Bediener den Antrieb entsprechend aktiviert. Die Betätigung der im Innenraum des Fahrzeugs angeordneten Betätigungshandhabe zum Öffnen und Schließen der Schiebetür erfolgt grundsätzlich in entgegengesetzte Richtungen, d.h. die erste Richtung zum Zuziehen der Schiebetür ist der zweiten Richtung zum Öffnen der Schiebetür entgegengesetzt. In einem anderen Stand der Technik wird die gegensätzlich gerichtete Betätigungsrichtung zur Betätigung der Betätigungshandhabe durch eine aufwändige Getriebekonstruktion am Türschloss realisiert. Dabei ist zwischen der Betätigungshandhabe und dem Türschloss eine Stange zwischen geschaltet, die in das Türschloss der Schiebetür hineinwirkt, wo letztlich die Bewegung über die Getriebekonstruktion auf das eigentliche Schlosssystem entsprechend umgesetzt wird. Von Nachteil ist hierbei, dass die Getriebekonstruktion ein kostenintensives sowie komplexes und damit problemanfälliges System darstellt.

Der Erfindung liegt die Aufgabe zugrunde eine Lösung zu schaffen, die auf konstruktiv einfache Weise eine Betätigungsanordnung bereitstellt, die auf eine aufwändige Getriebekonstruktion verzichtet und die kostengünstig in ihrer Herstellung ist.

Bei einer Betätigungsanordnung der eingangs bezeichneten Art wird die Aufgabe erfindungsgemäß dadurch gelöst, dass die Betätigungshandhabe an dem Übertragungselement befestigt ist und zusammen mit dem Übertragungselement um die Drehachse drehbar ist.

Vorteilhafte und zweckmäßige Ausgestaltungen und Weiterbildungen der Erfindung ergeben sich aus den Unteransprüchen.

Durch die Erfindung wird eine Betätigungsanordnung für ein Türschloss einer Schiebetür eines Kraftfahrzeugs zur Verfügung gestellt, die sich durch eine funktionsgerechte Konstruktion auszeichnet und einen kompakten und kostengünstigen Aufbau aufweist. Erfindungsgemäß wird eine Betätigung, d.h. eine Drehung oder Verschwenkung, der innenseitig im Kraftfahrzeug angeordneten Betätigungshandhabe in eine erste Richtung und in eine entgegengesetzte zweite Richtung immer in eine Zugbewegung des Seilzugelements umgewandelt. Die erfindungsgemäße Verwendung eines Seilzugelements im Gegensatz zu einer Stange stellt eine enorme Kostenreduktion dar. Ein solches Seilzugelement kann nur auf Zug beansprucht werden, weshalb die Betätigungsanordnung erfindungsgemäß ein Übertragungselement umfasst, welches diese Problematik löst. Unabhängig davon, in welche Richtung die Betätigungshandhabe betätigt bzw. gedreht wird, wird immer an dem Seilzugelement gezogen. Das Ziehen an dem Seilzugelement löst immer an der Schiebetür die Funktion des Entriegelns des Türschlosses und des Lösens des Türfeststellers aus. Der Kern der Erfindung ist somit die Verwendung eines Schiebetürsystems mit einer Kinematik, durch welche immer an dem Seilzugelement gezogen wird. Eine Betätigung der Betätigungshandhabe zum Öffnen der Schiebetür und eine Betätigung der Betätigungshandhabe zum Schließen der Schiebetür führt damit immer zu einer Zugbewegung an dem Seilzugelement, wodurch eine Entriegelung des Türschlosses oder eine Entriegelung des Türschlosses und eine Entriegelung des Türfeststellers ermöglicht wird. Dabei ist die Erfindung nicht nur auf Betätigungsanordnungen für reine Schiebetüren beschränkt, sondern kann auch auf Schwenkschiebetüren Anwendungen finden.

Erfindungsgemäß ist die Betätigungshandhabe an dem Übertragungselement befestigt und ist zusammen mit dem Übertragungselement um die Drehachse drehbar. Diese erfindungsgemäße Ausgestaltung weist den Vorteil auf, dass die Drehachse sowohl als Achse für das Übertragungselement als auch für die Betätigungshandhabe dient und kein zusätzliches Bauteil zur Realisierung der Achse für die Betätigungshandhabe vorgesehen sein muss.

Eine konstruktiv einfache Kinematik für das Seilzugelement ist in Ausgestaltung der erfindungsgemäßen Betätigungsanordnung dadurch gegeben, dass das erste Längsende des Seilzugelements an einem in einem Abstand zur Drehachse angeordneten und an dem Übertragungselement ausgebildeten Befestigungspunkt befestigt ist, der mit dem Übertragungselement um die Drehachse drehbar ist. Dabei ist der Befestigungspunkt fluchtend zu der Längsrichtung des Seilzugelements an dem Übertragungselement ausgebildet, so dass eine Drehung der Betätigungshandhabe sowohl in die erste als auch in die zweite Drehrichtung immer zu einer Ziehbewegung an dem Seilzugelement führt, wenn der Befestigungspunkt aus der Flucht der Längsrichtung ausgelenkt wird.

Um die Betätigungshandhabe automatisch nach ihrer Betätigung wieder zurück in die Ruhestellung zu bewegen, sieht die Erfindung in Ausgestaltung vor, dass die Betätigungshandhabe mit Hilfe eines Rückstellmittels aus der ersten oder zweiten Betriebsstellung in die Ruhestellung zurückbewegbar ist, wobei das Rückstellmittel ein erstes Lagerelement, welches mit der Betätigungshandhabe bewegungsgekoppelt ist, ein zweites Lagerelement, welches ortsfest zu dem ersten Lagerelement an der Betätigungsanordnung angeordnet ist, und ein elastisches Rückstellglied aufweist, welches an einem der beiden Lagerelemente befestigt ist und sich an dem anderen Lagerelement abstützt.

Dabei ist es besonders günstig, wenn das Betätigungsglied ein Federelement ist, welches bei einer Drehung der Betätigungshandhabe aus der Ruhestellung eine Rückstellkraft aufbringt. Beispielsweise kann das Federelement an dem ersten Lagerelement befestigt sein, wohingegen sich zwei Schenkel des Federelements an dem zweiten Lagerelement abstützen. Wenn das erste Lagerelement nun mit der Betätigungshandhabe bewegungsgekoppelt ist und das zweite Lagerelement ortsfest an der Betätigungsanordnung festgelegt ist, dann erfolgt eine Bewegung der Betätigungshandhabe aus der Ruhestellung in die erste oder zweite Betriebsstellung entgegen der von dem Federelement ausgeübten Rückstellkraft, wobei das Federelement die Betätigungshandhabe bei Betätigung dann immer in die Ruhestellung zurück drängt.

In einer weiteren vorteilhaften Ausgestaltung sieht die Erfindung vor, dass das erste Längsende des Seilzugelements zweisträngig ausgebildet ist, wobei ein erster Seilzugstrang des ersten Längsendes des Seilzugelements mit einer in einem Abstand zur Drehachse angeordneten und an dem Übertragungselement ausgebildeten ersten Befestigungseinrichtung befestigt ist, wobei ein zweiter Seilzugstrang des ersten Längsendes des Seilzugelements mit einer in einem Abstand zur Drehachse angeordneten und an dem Übertragungselement ausgebildeten zweiten Befestigungseinrichtung befestigt ist, wobei die erste Befestigungseinrichtung und die zweite Befestigungseinrichtung mit Bezug auf die Drehachse unter einem vorgegebenen Winkel zueinander versetzt angeordnet sind, und wobei bei in Ruhestellung angeordneter Betätigungshandhabe eine Winkelhalbierende des Winkels mit der Längsrichtung des Seilzugselements fluchtet. Diese Ausgestaltung hat gegenüber einer einstrangigen Ausgestaltung den Vorteil, dass lediglich ein kleiner Drehwinkel bei Betätigung der Betätigungshandhabe notwendig ist, um einen entsprechend großen Weg in die gewünschte Zugrichtung zu realisieren.

Die Erfindung sieht in weiterer Ausgestaltung für die Variante des zweisträngig ausgebildeten Seilzugelements vor, dass die erste Befestigungseinrichtung und die zweite Befestigungseinrichtung als jeweiliges Langloch ausgebildet sind, in welchem das jeweilige vom Seilzugelement wegweisende Seilstrangende des ersten und zweiten Seilzugstrangs bewegbar gehalten ist. Mit Hilfe der Langlöcher verbleibt der bei Betätigung der Betätigungshandhabe nicht "genutzte" bzw. nicht gezogene Seilzugstrang unbetätigt und straff, so dass ein Ausbeulen des nicht gezogenen Seilzugstranges verhindert wird.

Von besonderem Vorteil ist es bei der zweisträngigen Variante des Seilzugelements, wenn der erste Seilzugstrang und der zweite Seilzugstrang zwischen Führungselementen verlaufend angeordnet sind. Dadurch wird verhindert, dass der unbetätigte Seilzugstrang aufgrund von Ausbeulen in angrenzende Bauteile eingreift.

In einer Ausgestaltung der Erfindung ist ferner vorgesehen, dass das erste Längsende des Seilzugelements an einem in einem Abstand zur Drehachse angeordneten und mit Bezug auf die Betätigungshandhabe ortsfesten Befestigungspunkt befestigt ist. Vorzugsweise ist zu diesem Zweck der ortsfeste Befestigungspunkt an einem Träger ausgebildet, an welchem die Drehachse drehbar gelagert ist und der an der Schiebetür befestigbar ist.

Für die Variante mit ortsfestem Befestigungspunkt sieht die Erfindung ferner vor, dass das Übertragungselement einen geradlinig verlaufend ausgebildeten Führungskanal aufweist, in welchem ein Seilabschnitt des Seilzugelements angeordnet ist, wobei bei in Ruhestellung angeordneter Betätigungshandhabe der Führungskanal mit der Längsrichtung des Seilzugselements fluchtet. Eine Auslenkung der Betätigungshandhabe - unabhängig von ihrer Drehrichtung - führt dazu, dass das Übertragungselement mitgedreht wird, wodurch der Führungskanal außer Flucht zu der Längsrichtung des Seilzugelements gelangt, was folglich zu einer Verwindung des Seilabschnitts und damit zu einer Zugbewegung an dem Seilzugelement führt.

Um die Reibung des in dem Führungskanal angeordneten Seilabschnitts zu verringern, sieht die Erfindung in weiterer Ausgestaltung vor, dass der Führungskanal von wenigstens einem Rollenpaar gebildet ist, zwischen denen der Seilabschnitt des Seilzugelements verläuft.

In einer weiteren Variante der Betätigungsanordnung sieht die Erfindung vor, dass das Seilzugelement um die Drehachse und um das Übertragungselement derart herumgeführt angeordnet ist, dass ein das erste Längsende aufweisender Seilzugabschnitt parallel sowie in entgegengesetzter Längsrichtung des Seilzugelements verlaufend zu dem auf der gegenüberliegenden Seite des Übertragungselements in Längsrichtung verlaufenden Seilzugabschnitt angeordnet ist, wobei das Übertragungselement ein T-förmig ausgebildetes Betätigungselement aufweist, das bei in Ruhestellung angeordneter Betätigungshandhabe zwischen den Seilzugabschnitten liegend angeordnet ist und bei Betätigung der Betätigungshandhabe auf einen zugeordneten Seilzugabschnitt einwirkt und diesen von der Drehachse wegweisend auslenkt. Die Auslenkung des zugeordneten Seilzugabschnitts bewirkt eine Zugbewegung an dem Seilzugelement.

Die Erfindung sieht in weiterer Ausgestaltung vor, dass die Drehachse an einem an der Schiebetür befestigbaren Träger drehbar gelagert ist. Der Träger ermöglicht es, dass die Betätigungsanordnung gemäß der Erfindung als kompaktes Modul an dem Kraftfahrzeug an der Schiebetür auf einfache Weise eingebaut werden kann.

In einer weiteren Variante der Betätigungsanordnung gemäß der Erfindung ist vorgesehen, dass das erste Längsende des Seilzugelements an einem translatorisch und in Längsrichtung des Seilzugelements bewegbar gelagerten Schieberelement befestigt ist, welches mit dem Übertragungselement bewegungsgekoppelt ist. Diese Variante hat den Vorteil, dass das Seilzugelement auf einfache Weise an dem Schieberelement fixiert werden kann und keine Verwindung eines Seilabschnitts des Seilzugelements erforderlich ist.

Die Erfindung sieht in Ausgestaltung der zuletzt genannten Variante vor, dass die Drehachse durch ein in dem Schieberelement ausgebildetes Langloch hindurchgeführt angeordnet ist und einen beidseitig von der Drehachse radial erstreckenden Betätigungshebel aufweist, der bei Betätigung der Betätigungshandhabe in Anlage an eine an dem Schieberelement angeformte Anschlagfläche gelangt und das Schieberelement relativ zu der Drehachse in Längsrichtung des Seilzugelements verschiebt. Diese Ausgestaltung weist vorteilhafterweise einen sehr kompakten und wenig Bauraum beanspruchenden Aufbau aus.

Zur Rückstellung des Schieberelements und damit der Betätigungshandhabe in ihre Ruhestellung ist in Ausgestaltung der letzten Variante der Betätigungsanordnung vorgesehen, dass das Schieberelement über ein elastisches Rückstellelement mit dem Träger gekoppelt ist. Bei gedrehter Betätigungshandhabe wird nach Betätigung die Anschlagfläche mitsamt dem Schieberelement mit Hilfe des Rückstellelements in die Ausgangsstellung zurückbewegt, wobei die Anschlagfläche das Übertragungselement und damit die Betätigungshandhabe in die Grundstellung bzw. Ruhestellung zurückbewegt.

Gemäß einer anderen Variante der erfindungsgemäßen Betätigungsanordnung ist es vorgesehen, dass das erste Längsende des Seilzugelements als Seilschlaufe ausgebildet ist, die an einer an dem Träger angeformten Halterung eingehakt ist, wobei das Übertragungselement einen beidseitig von der Drehachse radial erstreckenden Auslenkhebel aufweist, um den herum die Seilschlaufe geführt ist, wobei bei Betätigung der Betätigungshandhabe der Auslenkhebel abschnittsweise in Anlage an die Seilschlaufe gelangt und diese abschnittsweise von der Drehachse wegbewegt. Bei dieser Variante ist das Übertragungselement zwischen dem einstrangigen Seilzugelement und der Halterung angeordnet, wobei die Schlaufe gespannt um den Auslenkhebel herumliegend angeordnet ist. Die Hebelarme des Auslenkhebels sind in Ruhestellung der Betätigungshandhabe fluchtend zu der Längsrichtung des Seilzugelements angeordnet, so dass eine Drehung der Hebelarme dazu führt, dass die Seilschlaufe gespreizt wird, wobei die Spreizung der Seilschlaufe eine Zugbewegung an dem Seilzugelement bewirkt.

Zur Reduzierung der Reibung bei Auslenkung des Auslenkhebels ist in Ausgestaltung der Erfindung vorgesehen, dass der Auslenkhebel drehgelagerte Rollen aufweist, welche bei Betätigung der Betätigungshandhabe abschnittsweise in Anlage an die Seilschlaufe gelangen.

Als weitere Variante ist für die Betätigungsanordnung gemäß der Erfindung vorgesehen, dass das erste Längsende des Seilzugelements als Seilschlaufe ausgebildet ist, wobei das Übertragungselement einen scheibenförmig ausgebildeten Grundkörper umfasst, durch dessen Zentrum die Drehachse verläuft und in dessen kreisförmiger Umfangswandung eine Aufnahmeausnehmung ausgebildet ist, in welcher die Seilschlaufe abschnittsweise aufgenommen ist.

Die Erfindung sieht in Ausgestaltung ferner vor, dass die Drehachse horizontal verlaufend angeordnet ist. Die horizontale Anordnung der Drehachse erlaubt einen platzsparenden und kompakten Einbau der Betätigungsanordnung.

Schließlichist es in weiterernicht zur Erfindung gehörender Ausgestaltung auch denkbar, dass die Betätigungshandhabe und das Übertragungselement über ein Kegelradgetriebe miteinander bewegungsgekoppelt sind. Das Kegelradgetriebe erlaubt eine winkelige Anordnung von Betätigungshandhabe und Übertragungselement und gewährleistet dennoch eine einwandfreie Übertragung der Drehbewegung der Betätigungshandhabe.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 eine Seitenansicht eines Kraftfahrzeugs mit einer Schiebetür,
Figur 2 eine Draufsicht auf eine erfindungsgemäße Betätigungsanordnung gemäß einer ersten Ausführungsform,
Figur 3 eine perspektivische Ansicht einer Betätigungsanordnung gemäß einer zweiten Ausführungsform,
Figur 4 eine perspektivische Ansicht einer Betätigungsanordnung gemäß einer dritten Ausführungsform, bei welcher eine Betätigungshandhabe in ihrer Ruhestellung angeordnet ist,
Figur 5 eine perspektivische Ansicht der Betätigungsanordnung aus Figur 4, bei welcher die Betätigungshandhabe in eine erste Drehrichtung verschwenkt ist,
Figur 6 eine perspektivische Ansicht der Betätigungsanordnung aus Figur 4, bei welcher die Betätigungshandhabe in eine zweite Drehrichtung verschwenkt ist,
Figur 7 eine perspektivische Ansicht einer Betätigungsanordnung gemäß einer vierten Ausführungsform, bei welcher eine Betätigungshandhabe in ihrer Ruhestellung angeordnet ist,
Figur 8 eine perspektivische Ansicht der Betätigungsanordnung aus Figur 7, bei welcher die Betätigungshandhabe in eine erste Drehrichtung verschwenkt ist,
Figur 9 eine perspektivische Ansicht der Betätigungsanordnung aus Figur 7, bei welcher die Betätigungshandhabe in eine zweite Drehrichtung verschwenkt ist,
Figur 10 eine perspektivische Ansicht einer Betätigungsanordnung gemäß einer fünften Ausführungsform,
Figur 11 eine Draufsicht auf die Betätigungsanordnung aus Figur 10,
Figur 12 eine Draufsicht auf eine Ausgestaltung der Betätigungsanordnung aus Figur 10,
Figur 13 eine Draufsicht auf eine weitere Ausgestaltung der Betätigungsanordnung aus Figur 10,
Figur 14 eine perspektivische Ansicht einer Betätigungsanordnung gemäß einer sechsten Ausführungsform,
Figur 15 eine Draufsicht auf die Betätigungsanordnung aus Figur 14 für verschiedene Betriebsstellungen,
Figur 16 eine Draufsicht auf eine Ausgestaltung der Betätigungsanordnung aus Figur 14,
Figur 17 eine perspektivische Ansicht einer Betätigungsanordnung gemäß einer siebten Ausführungsform,
Figur 18 eine Draufsicht auf die Betätigungsanordnung aus Figur 17 für verschiedene Betriebsstellungen,
Figur 19 eine Draufsicht auf eine Ausgestaltung der Betätigungsanordnung aus Figur 17,
Figur 20 eine Draufsicht auf eine Betätigungsanordnung gemäß einer achten Ausführungsform,
Figur 21 eine perspektivische Ansicht einer Betätigungsanordnung gemäß einer nicht zur Erfindung gehörenden neunten Ausführungsform,
Figur 22 eine Detailansicht der Betätigungsanordnung aus Figur 21,
Figur 23 eine weitere Detailansicht der Betätigungsanordnung aus Figur 21,
Figur 24 ein Rückstellmittel in einer Perspektivansicht, und
Figur 25 ein Rückstellmittel in einer Draufsicht.

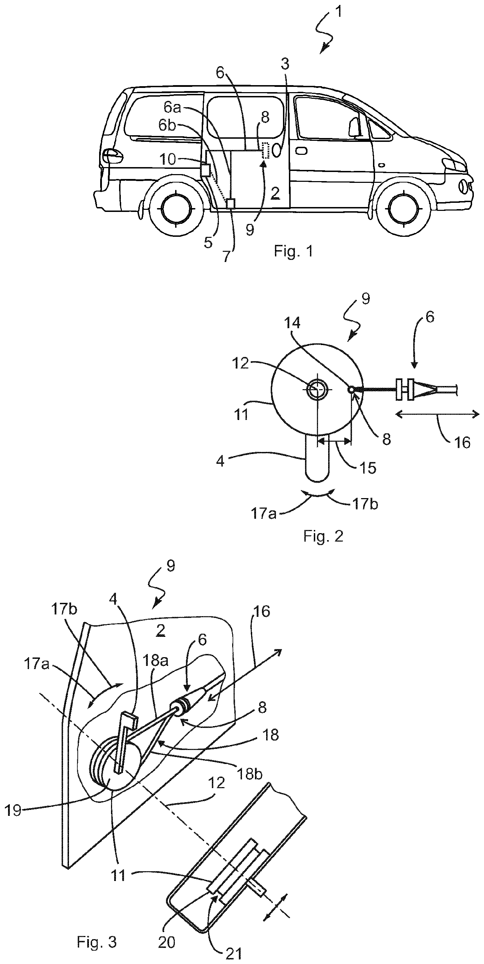

In Figur 1 ist ein Fahrzeug bzw. Kraftfahrzeug 1 in Form eines Vans exemplarisch dargestellt, welches in dem Beispiel über zwei Schiebetüren 2 (eine davon ist aus Figur 1 ersichtlich) verfügt, die über einen Außentürgriff 3 von außen und innenseitig über eine aus Figur 1 nicht ersichtliche Betätigungshandhabe 4 (siehe aber zum Beispiel Figur 3) geöffnet werden können. Die Schiebetüren 2 werden über ein jeweiliges Türschloss 5 fest verschlossen und können über eine jeweilige Betätigung des Außentürgriffs 3 oder der innenseitig angeordneten Betätigungshandhabe 4 geöffnet werden. Diese Bewegung insbesondere an der Betätigungshandhabe 4 ist eine um eine Achse erfolgende Schwenkbewegung der hebelartig ausgebildeten Betätigungshandhabe 4, wobei die entsprechende Dreh- bzw. Schwenkbewegung der Betätigungshandhabe 4 auf das entsprechende Türschloss 5 erfindungsgemäß über ein mit der Bewegung der Betätigungshandhabe 4 gekoppeltes Seilzugelement 6 übertragen wird. Durch die Bewegung der Betätigungshandhabe 4 lässt sich das entsprechende Türschloss 5 und damit die zugehörige Schiebetür 2 dann öffnen. Das Seilzugelement 6 wirkt nicht nur auf das entsprechende Türschloss 5, sondern auch auf einen für jede Schiebetür 2 vorgesehenen Türfeststeller 7 ein. Der Türfeststeller 7 dient dazu, die geöffnete Schiebetür 7 in Position zu halten, damit sich diese bei in Hanglage angeordnetem Kraftfahrzeug 1 nicht selbsttätig in eine Richtung bewegt und einen Insassen einklemmt. Das Einwirken des Seilzugelements 6 auf den Türfeststeller 7 kann entweder direkt über einen entsprechenden und von dem Seilzugelement 7 abgehenden Seilzug 6a (durchgezogene Linie in Figur 1) oder indirekt über eine entsprechende Mechanik, die im Türschloss 5 integriert ist, und einen vom Türschloss 5 abgehenden Seilzug 6b (gestrichelte Linie in Figur 1) erfolgen. Ein erstes Längsende 8 des Seilzugelements 6 ist innenseitig im Kraftfahrzeug 1 mit einer in Figur 1 gestrichelt angedeuteten Betätigungsanordnung 9 verbunden, wobei die Betätigungsanordnung 9 die Betätigungshandhabe 4 aufweist, mit welcher das Seilzugelement 6 bewegungsgekoppelt ist. Das zweite Längsende 10 des Seilzugelements 6 ist zumindest mit dem Türschloss 5 gekoppelt und kann zusätzlich - wie vorstehend ausgeführt - auch mit dem Türfeststeller 7 indirekt oder direkt gekoppelt sein, so dass eine Betätigung der Betätigungshandhabe 4 zum Zuziehen oder Öffnen der Schiebetür 2 immer dazu führt, dass das Türschloss 5 geöffnet und der Türfeststeller 7 gelöst wird.

Bei allen Ausführungsformen erstreckt sich das Seilzugelement 6 zumindest abschnittsweise in eine Längsrichtung 16. Damit ist gemeint, dass das Seilzugelement 6 zumindest für einen Abschnitt bis zu seinem ersten Längsende 8 geradlinig verlaufend angeordnet bzw. gespannt ist.

In Figur 2 ist eine erste Ausführungsform der erfindungsgemäßen Betätigungsanordnung 9 in einer Draufsicht gezeigt. Die Betätigungsanordnung 9 umfasst ein innenseitig an der Schiebetür 2 anbringbares Übertragungselement 11 und die Betätigungshandhabe 4, wobei das Übertragungselement 11 an einer Drehachse 12 drehfest angebracht ist. Die Betätigungshandhabe 4 ist ferner an dem Übertragungselement 11 befestigt, so dass die Betätigungshandhabe 4 zusammen mit dem Übertragungselement 11 um die Drehachse 12 drehbar ist. Das Seilzugelement 6 ist nach Art eines Bowdenzugs ausgebildet, wobei in der Figur 2 nur das erste Längsende 8 des Seilzugelements 6 gezeigt ist, welches bei der ersten Ausführungsform an einem Befestigungspunkt 14 befestigt ist. Der Befestigungspunkt 14 ist in einem Abstand 15 zur Drehachse 12 an dem Übertragungselement 11 ausgebildet. Genauer gesagt ist der Befestigungspunkt 14 in dem Ausführungsbeispiel der Figur 2 als Ausnehmung ausgebildet, in welche das kugelförmig ausgebildete, erste Längsende 8 des Seilzugelements 6 formschlüssig eingesteckt ist. Die Figur 2 zeigt eine Anordnung, bei welcher sich die Betätigungshandhabe 4 in einer Ruhestellung befindet und keine Zugkraft auf das Seilzugelement 6 wirkt, so dass nicht auf das Türschloss 5 und den Türfeststeller 7 eingewirkt wird. In Ruhestellung der Betätigungshandhabe 4 ist der Befestigungspunkt 14 fluchtend zu der Längsrichtung 16 des Seilzugelements 6 angeordnet, so dass auf das Seilzugelement 6 eine Grundspannung wirkt, bei welcher nicht auf das Türschloss 5 und den Türfeststeller 7 eingewirkt wird. Erfolgt nun eine Betätigung der Betätigungshandhabe 4 in eine erste Drehrichtung 17a oder in eine zweite Drehrichtung 17b, so wird der Befestigungspunkt 14 und damit das erste Längsende 8 des Seilzugelements 6 in Richtung der Drehachse 12 bewegt, wodurch eine in Richtung der Drehachse 12 wirkende Zugkraft auf das Seilzugelement 6 einwirkt und sowohl auf das Türschloss 5 zum Entriegeln als auch auf den Türfeststeller 7 zum Öffnen eingewirkt wird. Es ist ersichtlich, dass das in Figur 2 scheibenförmig ausgebildete Übertragungselement 11 auch als ein stegförmiger Ansatz ausgebildet sein kann, der sich von der Drehachse 12 aus erstreckt und an dieser angeformt ist. Wichtig ist, dass der Befestigungspunkt 14 einen vorgegebenen Abstand 15 zur Drehachse 12 aufweist und in Ruhestellung der Betätigungshandhabe 4 der Befestigungspunkt 14 in Flucht zu der Längsrichtung 16 des Seilzugelements 6 angeordnet ist. Folglich ist das Übertragungselement 11 mit dem ersten Längsende 8 des Seilzugelements 6 derart bewegungsgekoppelt, dass eine rotatorische Drehbewegung der Betätigungshandhabe 4 in die erste Drehrichtung 17a das erste Längsende 8 des Seilzugelements 6 translatorisch aus der Grundposition in Richtung der Drehachse 12 in eine Betätigungsposition bewegt, wobei in der Betätigungsposition das Seilzugelement 6 auf das Türschloss 5 und den Türfeststeller einwirkt. Ebenso führt eine rotatorische Drehbewegung der Betätigungshandhabe 4 in die zweite Drehrichtung 17b, die der ersten Drehrichtung 17a entgegengesetzt ist, dazu, das erste Längsende 8 des Seilzugelements 6 translatorisch aus der Grundposition in Richtung der Drehachse 12 in die Betätigungsposition bewegt wird.

Soweit bei den weiteren Ausführungsbeispielen, die in den Figuren 3 bis 23 gezeigt sind, gleiche Bezugszeichen wie für das erste Ausführungsbeispiel gemäß der Figur 2 verwendet werden, betreffen diese jeweils identische oder gleiche Elemente oder Bauteile, so dass auf die vorstehende Beschreibung verwiesen sei, die dementsprechend dann auch für die Ausführungsbeispiele der Figuren 3 bis 23 Gültigkeit besitzt.

Bei der in Figur 3 gezeigten zweiten Ausführungsform ist die Betätigungshandhabe 4 auch an dem Übertragungselement 11 angeformt, so dass eine Drehung der Betätigungshandhabe 4 zu einer Drehung des Übertragungselements 11 um die Drehachse 12 führt. Die Betätigungshandhabe 4 und das Übertragungselement 11 drehen sich also gemeinsam um die oder mit der Drehachse 12, je nachdem, ob das Übertragungselement 11 drehfest mit der Drehachse 12 verbunden ist oder drehbar um diese gelagert ist. Bei der zweiten Ausführungsform ist das erste Längsende 8 des Seilzugelements 6 als Seilschlaufe 18 ausgebildet, wohingegen das Übertragungselement 11 einen scheibenförmig ausgebildeten Grundkörper 19 aufweist, durch dessen Zentrum die Drehachse 12 hindurch verläuft und in dessen kreisförmiger Umfangswandung 20 eine Aufnahmeausnehmung 21 ausgebildet ist. In der Aufnahmeausnehmung 20 ist die Seilschlaufe 18 abschnittsweise formschlüssig aufgenommen. Je nach Drehrichtung der Betätigungshandhabe 4 wird dann an einem Strang 18a oder 18b der Seilschlaufe 18 gezogen, wohingegen der andere Strang 18b oder 18a entlastet wird. Unabhängig von der Drehrichtung der Betätigungshandhabe 4 wird also immer einer der beiden Stränge 18a, 18b auf dem Übertragungselement 11 "aufgewickelt" und zieht dadurch an dem Seilzugelement 6, so dass das Seilzugelement 6 bei Betätigung der Betätigungshandhabe 4 eine Zugkraft erfährt, durch die das Seilzugelement 6 in Richtung der Drehachse 6 bewegt wird. Hierbei ist die Drehachse 12 in Flucht zu der Längsrichtung 16 des Seilzugelements 6 angeordnet.

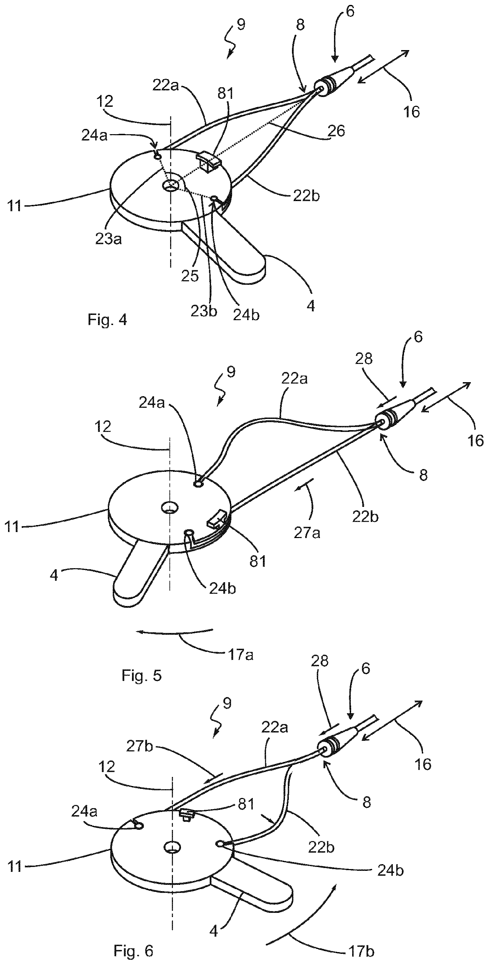

Die Figuren 4 bis 6 zeigen eine dritte Ausführungsform für die Betätigungsanordnung 9, bei der die Betätigungshandhabe 4 an dem Übertragungselement 11 befestigt ist bzw. mit diesem einstückig ausgebildet ist, so dass beide gemeinsam um die Drehachse 12 drehen oder drehfest mit dieser verbunden sind. Gemäß der dritten Ausführungsform ist das erste Längsende 8 des Seilzugelements 6 zweisträngig ausgebildet, wobei auch eine Ausbildung wie bei der zweiten Ausführungsform als Seilschlaufe denkbar ist, sofern das Übertragungselement 11 scheibenförmig ausgebildet ist. Genauer gesagt sind bei dieser Ausführungsform an dem ersten Längsende 8 des Seilzugelements 6 ein erster Seilzugstrang 22a und ein zweiter Seilzugstrang 22b angeformt. Von dem zweisträngigen Längsende 8 ist der erste Seilzugstrang 22a des ersten Längsendes 8 des Seilzugelements 6 mit einer in einem Abstand 23a zur Drehachse 12 angeordneten und an dem Übertragungselement 11 ausgebildeten ersten Befestigungseinrichtung 24a befestigt. Ferner ist der zweite Seilzugstrang 22b des ersten Längsendes 8 des Seilzugelements 6 mit einer in einem Abstand 23b zur Drehachse 12 angeordneten und an dem Übertragungselement 11 ausgebildeten zweiten Befestigungseinrichtung 24b befestigt. Die beiden Befestigungseinrichtungen 24a, 24b sind als Ausnehmungen in dem scheibenförmigen Übertragungselement 11 ausgebildet und im Abstand 23a, 23b zu der Drehachse 12 angeordnet. In diese nach Art von Ausnehmungen ausgebildeten Befestigungseinrichtungen 24a, 24b sind die entsprechenden Enden der Seilzugstränge 22a, 22b formschlüssig eingesteckt. Die Befestigungseinrichtungen 24a, 24b sind mit Bezug auf die Drehachse 12 unter einem vorgegebenen Winkel 25 zueinander versetzt angeordnet, wobei in Ruhestellung der Betätigungshandhabe 4 (siehe Figur 4) die Winkelhalbierende 26 des Winkels 25 mit der Längsrichtung 12 des Seilzugselements 6 fluchtet. In Figur 5 ist die Betätigungshandhabe 4 in die erste Drehrichtung 17a verschwenkt. Durch diese Betätigung wird der zweite Seilzugstrang 22b in Richtung des Pfeils 27a gezogen, so dass das Seilzugelement 6 eine Zugkraft in Richtung des Pfeils 28 erfährt, so dass das Seilzugelement 6 auf Zug beansprucht wird und auf das Türschloss 5 zum Öffnen und ggf. auf den Türfeststeller 7 zum Entriegeln einwirkt. Die Betätigung der Betätigungshandhabe 4 in die erste Drehrichtung 17a kann bei einer Bewegung der Schiebetür 2 in Richtung ihrer Schließstellung entsprechen. Dementsprechend würde dann Figur 6 eine Bewegung der Schiebetür 2 in Richtung ihrer Offenstellung entsprechen, wobei hierbei die Betätigungshandhabe 4 in die zweite Drehrichtung 17b verschwenkt wird, wodurch der zweite Seilzugstrang 22b in Richtung des Pfeils 27b gezogen wird, wodurch letztlich das Seilzugelement 6 wieder die Zugkraft 28 erfährt und in Richtung der Drehachse 12 bewegt wird. Dementsprechend erfährt das Seilzugelement 6 dieselbe Wirkung, egal in welche der beiden Drehrichtungen 17a oder 17b die Betätigungshandhabe 4 um die Drehachse 12 verschwenkt wird.

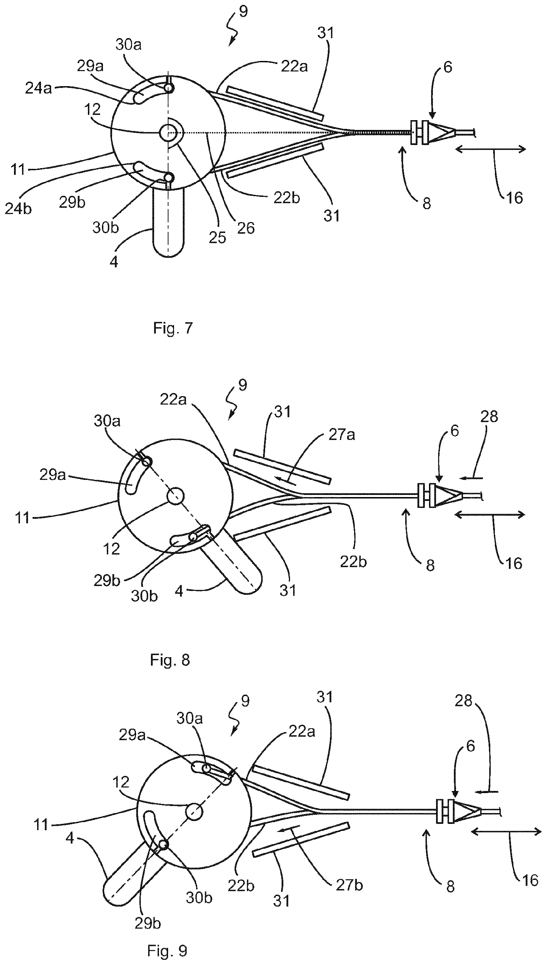

Die in den Figuren 7 bis 9 gezeigte vierte Ausführungsform der Betätigungsanordnung 9 entspricht im Wesentlichen der dritten Ausführungsform, so dass auf die vorstehende Beschreibung verwiesen wird, die auch Gültigkeit für die vierte Ausführungsform besitzt. Auch die Funktionalität der vierten Ausführungsform entspricht im Wesentlichen der Funktionalität der dritten Ausführungsform. Im Unterschied zu der dritten Ausführungsform sind bei der vierten Ausführungsform die beiden Befestigungseinrichtungen 24a, 24b als jeweilige Langlöcher 29a und 29b ausgebildet, in denen die zugeordneten und vom Seilzugelement 6 wegweisenden Seilstrangenden 30a und 30b bewegbar entlang des entsprechenden Langlochs 29a, 29b gehalten sind. Auch bei der vierten Ausführungsform fluchtet die Drehachse 12 mit der Winkelhalbierenden 26 des Winkels 25 zwischen den beiden Befestigungseinrichtungen 24a, 24b, wenn die Betätigungshandhabe 4 in ihrer Ruhestellung angeordnet ist. Bei einer Drehung der Betätigungshandhabe 4 in die erste Drehrichtung 17a (siehe Figur 8) wird der erste Seilzugstrang 22a auf dem scheibenförmigen Übertragungselement 11 aufgewickelt und auf Zug (siehe Pfeil 27a) belastet, so dass das Seilzugelement 6 aufgrund der wirksam werdenden Zugkraft 28 in Richtung der Drehachse 12 und entlang seiner Längsrichtung 12 bewegt wird. Auch bei einer Drehung der Betätigungshandhabe 4 in die zweite Drehrichtung 17b (siehe Figur 9) wirkt eine Zugkraft 28 auf das Seilzugelement 6, wodurch dieses in Richtung der Drehachse 12 bewegt wird. Dabei wird der zweite Seilzugstrang 22b "aufgewickelt" und übt eine Kraft in Richtung des Pfeils 27b aus. Durch die Langlöcher 29a und 29b und die damit ermöglichte Bewegbarkeit der Enden der beiden Seilzugstränge 22a, 22b wird ein "Ausbeulen" der Seilzugstränge 22a, 22b verhindert, wenn einer der beiden nicht auf Zug beansprucht ist. Um darüber hinaus zu verhindern, dass ein nicht auf Zug belasteter Seilzugstrang 22a oder 22b mit angrenzenden Bauteilen in Eingriff kommt, sind bei der vierten Ausführungsform Führungselemente 31 vorgesehen. Entsprechend sind der erste Seilzugstrang 22a und der zweite Seilzugstrang 22b zwischen den Führungselementen 31 verlaufend angeordnet.

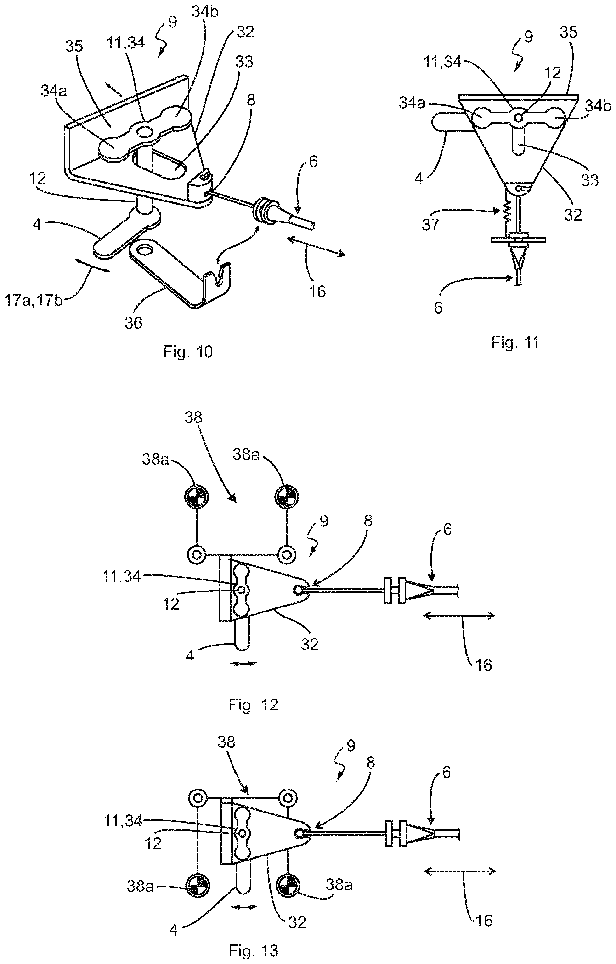

In den Figuren 10 bis 13 ist eine fünfte Ausführungsform der erfindungsgemäßen Betätigungsanordnung 9 gezeigt. Bei dieser Ausführungsform ist das erste Längsende 8 des Seilzugelements 6 einstrangig ausgebildet und an einem Schieberelement 32 befestigt. Das Schieberelement 32 ist an einem in den Figuren 10 bis 13 nicht dargestellten Träger gelagert, der wiederum an der Schiebetür 2 befestigt ist. Das Schieberelement 32 ist translatorisch und in Längsrichtung 16 des Seilzugelements 6 verschiebbar an dem Träger gelagert, wobei auch die Drehachse 12 drehbar an dem Träger gelagert ist, wenn die Betätigungshandhabe 4 und das Übertragungselement 11 drehfest mit der Drehachse 12 verbunden sind. Das Übertragungselement 11 ist mit dem Schieberelement 32 bewegungsgekoppelt, worauf nachstehend noch eingegangen wird. Das Schieberelement 32 weist ein Langloch 33 auf, durch welches hindurch die Drehachse 12 geführt ist. Endseitig weist die Drehachse 12 einen zweiarmigen Betätigungshebel 34 auf, welcher dem Übertragungselement 11 entspricht. Der Betätigungshebel 34 erstreckt sich radial beidseitig der Drehachse 12 und ist bei unbetätigter Betätigungshandhabe 4 parallel verlaufend zu einer Anschlagfläche 35 angeordnet, die an dem Schieberelement 33 angeformt ist. Bei Betätigung der Betätigungshandhabe 4 dreht die Drehachse 12, wodurch sich auch der Betätigungshebel 34 dreht. Infolge der Drehung des Betätigungshebels 34 gelangt einer der beiden Hebelarme 34a oder 34b in Anlage an die Anschlagfläche 35, wodurch diese von der Drehachse 12 weg gedrückt wird. Durch das Wegdrücken der Anschlagfläche 35 wirkt auf das Seilzugelement 6 eine Zugkraft in Richtung der Drehachse 12, so dass das Seilzugelement 6 auf das Türschloss 5 zur Öffnung und ggf. auf den Türfeststeller 7 zur Entriegelung einwirkt. Mit anderen Worten gelangt bei Betätigung der Betätigungshandhabe 4 ein Hebelarm 34a oder 34b des Betätigungshebels 34 in Anlage an die an dem Schieberelement 32 angeformte Anschlagfläche 35, wobei der Betätigungshebel 34 das Schieberelement 32 relativ zu der Drehachse 12 in Längsrichtung 16 des Seilzugelements 6 verschiebt. In Figur 10 ist ein Teil 36 eines Trägers gezeigt, welcher zur Abstützung des Seilzugelements 6 dient. Zur Rückstellung des bei Betätigung der Betätigungshandhabe 4 translatorisch bewegten Schieberelements 32 in seine Grundstellung ist ein elastisches Rückstellelement 37 vorgesehen, welches mit seinem einen Ende an dem Träger 36 und mit seinem anderen Ende an dem Schieberelement 32 angebracht ist. Auf diese Weise ist das Schieberelement 32 über ein elastisches Rückstellelement 37 mit dem Träger 36 gekoppelt und nach Betätigung der Betätigungshandhabe 4 in seine Grundstellung zurückbewegbar. In den Figuren 12 und 13 sind verschiedene Möglichkeiten gezeigt, wie das Schieberelement 32 translatorisch an dem Träger lagerbar ist. Die in diesen beiden Figuren gezeigte Möglichkeit verwendet ein Koppelgetriebe 38, das über zwei Festlager 38a verfügt, die an dem Träger fixiert sind. Während in Figur 12 das Koppelgetriebe 38 seitliche neben der Betätigungsanordnung 9 angeordnet ist, ist das Koppelgetriebe in Figur 13 unterhalb (oder auch oberhalb) des Schieberelements 32 angeordnet, was Bauraum einspart. In den Figuren 12 und 13 ist der Sonderfall gezeigt, bei dem die Längen der sich gegenüberliegenden Getriebeglieder gleich groß sind, wobei es auch denkbar ist, dass alle Getriebeglieder die gleiche Länge aufweisen. Bei paarweise gleichlangen Getriebegliedern sind die Getriebeglieder mit denselben Längen immer parallel zueinander ausgerichtet.

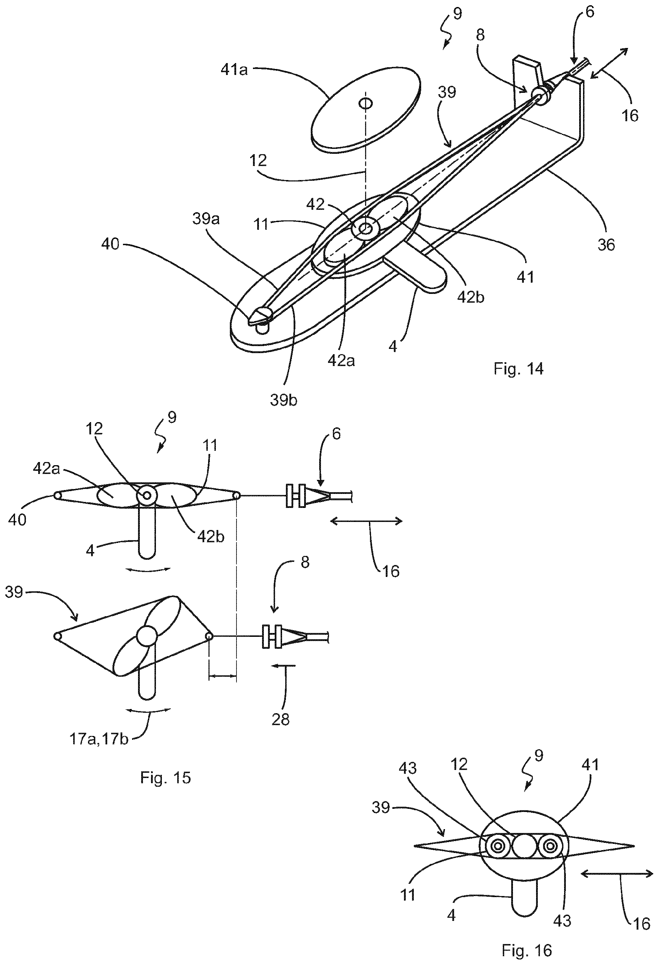

Die Figuren 14 bis 16 zeigen eine sechste Ausführungsform der erfindungsgemäßen Betätigungsanordnung 9. Die Betätigungshandhabe 4 ist wieder an dem Übertragungselement 11 befestigt, so dass sich bei einer Drehung der Betätigungshandhabe 4 das Übertragungselement 11 um die oder mit der Drehachse 12 mit dreht, je nachdem, ob die Drehachse 11 drehbar zu dem Übertragungselement 11 ist oder ob die Drehachse 12 drehfest an dem Übertragungselement 11 angebracht ist. Die Drehachse 12 ist an einem an der Schiebetür 2 befestigbaren Träger 36 drehbar gelagert, wenn das Übertragungselement 11 drehfest mit der Drehachse 12 verbunden ist. An dem ersten Längsende 8 des Seilzugelements 6 ist bei der sechsten Ausführungsform eine Seilschlaufe 39 angeformt, die in einer hakenförmig und am Träger 36 ausgebildeten Halterung 40 eingehakt ist. Das Übertragungselement 11 weist einen ellipsenförmigen Grundkörper 41 auf, an welchem die Betätigungshandhabe 4 angeformt ist und von dem die Betätigungshandhabe 4 radial absteht. Auf dem ellipsenförmigen Grundkörper 41 ist ein Auslenkhebel 42 angeformt, dessen Hebelarme 42a, 42b sich beidseitig und flügelartig der Drehachse 12 erstrecken. In Ruhestellung der Betätigungshandhabe 4 (siehe Figur 14) sind die flügelförmigen Hebelarme 42a und 42b fluchtend zu der Längsrichtung 16 des Seilzugelements 6 ausgerichtet angeordnet, wobei sich der Auslenkhebel 42 zwischen zwei Strängen 39a und 39b der Seilschlaufe 39 erstreckt. Die Seilschlaufe 39 ist folglich um den Auslenkhebel 42 herum verlaufend angeordnet, wobei das Übertragungselement 11 zwischen dem ersten Längsende 8 des Seilzugelements 6 und der Halterung 40 angeordnet ist. Bei einer Betätigung der Betätigungshandhabe 4 in eine der beiden Drehrichtungen 17a oder 17b dreht sich der flügelförmige Auslenkhebel 42, wie Figur 15 zeigt. In der oberen Darstellung der Figur 15 ist die Betätigungshandhabe 4 in Ruhestellung angeordnet, wohingegen in der unteren Darstellung der Figur 15 die Betätigungshandhabe 4 betätigt ist. Bei Betätigung dreht sich der Grundkörper 41 des Übertragungselements 11 um die Drehachse 12, wodurch sich auch der flügelförmige Auslenkhebel 42 mit dreht. Die Drehung des Auslenkhebels 42 aus seiner Grundstellung, wenn die Betätigungshandhabe 4 in ihrer Ruhestellung angeordnet ist, bewirkt, dass die beiden Stränge 39a, 39b der Seilschlaufe 39 auseinander und von der Drehachse 12 wegbewegt werden. Der flügelförmige Auslenkhebel 42 spreizt folglich die Seilschlaufe 39, so dass auf das erste Längsende 8 des Seilzugelements 6 eine Zugkraft 28 wirkt, unabhängig davon in welche der beiden Drehrichtungen 17a oder 17b die Betätigungshandhabe 4 geschwenkt wird. Die Spreizung der Seilschlaufe 39 bewirkt folglich eine Zugkraft 28 auf das Seilzugelement 6, so dass das erste Längsende 8 in Richtung der Drehachse 12 bewegt wird und das Seilzugelement 6 auf das Türschloss 5 zum Öffnen und ggf. den Türfeststeller 7 zum Entriegeln einwirkt. Die sechste Ausführungsform zeichnet sich somit dadurch aus, dass um den Auslenkhebel 42 herum die Seilschlaufe 39 geführt ist, wobei bei Betätigung der Betätigungshandhabe 4 der Auslenkhebel 42 abschnittsweise in Anlage an die Seilschlaufe 39 gelangt und diese abschnittsweise von der Drehachse 12 wegbewegt. Um ein Abgleiten der Seilschlaufe 39 von dem Grundkörper 41 zu verhindern, kann ein deckelförmiges Rückhalteelement 41a auf den flügelförmigen Auslenkhebel 42 aufgesetzt werden, so dass die Seilschlaufe 39 zwischen dem Rückhalteelement 41a und dem Grundkörper 41 angeordnet und gehalten ist. Zur Reduzierung von Reibungsverlusten können die Hebelarme 42a, 42b des Auslenkhebels 42 alternativ als auf dem Grundkörper 41 gelagerte Rollen 43 ausgebildet sein (siehe Figur 16), die bei Betätigung der Betätigungshandhabe 4 in Anlage an die Seilschlaufe 39 gelangen und die Seilschlaufe spreizen, wie es vorstehend für die Hebelarme 42a, 42b beschrieben ist. Die drehgelagerten Rollen 43gelangen bei Betätigung der Betätigungshandhabe 4 abschnittsweise in Anlage an die Seilschlaufe 39 und spreizen diese, wodurch das Seilzugelement 6 auf Zug belastet wird.

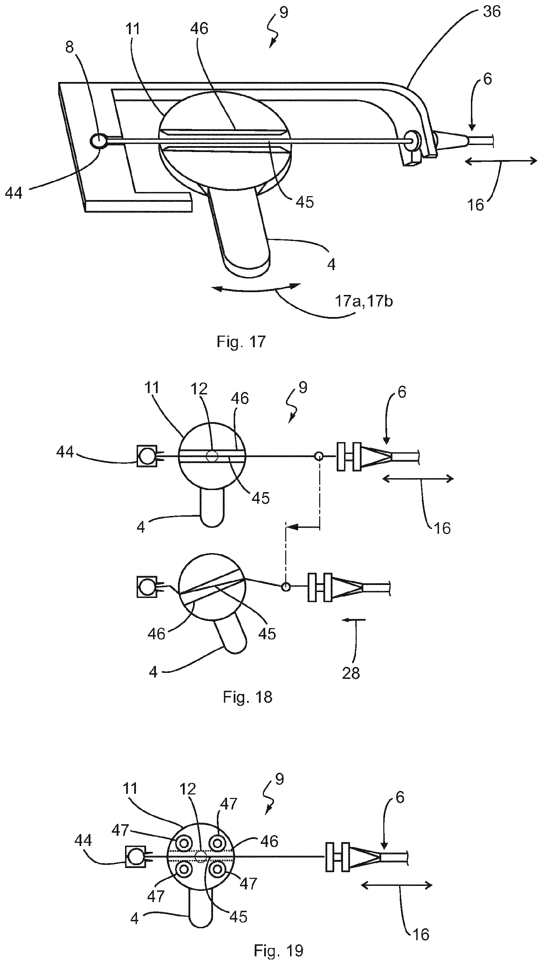

In den Figuren 17 bis 19 ist eine siebte Ausführungsform der erfindungsgemäßen Betätigungsanordnung 9. Ein Träger 36 spannt das erste Längsende 8 des Seilzugelements 6 an einem ortsfesten Befestigungspunkt 44, d.h. ein an der Schiebetür 2 oder an dem an der Schiebtür 2 befestigbaren Träger 36 ausgebildeter Punkt, ein. Der Befestigungspunkt 44 ist in einem Abstand zur Drehachse 12 angeordnet. Die Betätigungshandhabe 4 ist auch hier wieder an dem Übertragungselement 11 angeformt, so dass beide sich um die Drehachse 12 oder mit dieser gemeinsam drehen, wenn die Betätigungshandhabe 4 von einem Bediener betätigt und gedreht wird. In dem bei dieser Ausführungsform scheibenförmig ausgebildeten Übertragungselement 11 ist ein geradlinig verlaufender Führungskanal 46 ausgebildet, durch den ein am ersten Längsende 8 beginnender Seilabschnitt 45 des Seilzugelements 6 geführt verläuft. Die Figur 17 zeigt einen Zustand, bei welchem die Betätigungshandhabe 4 in ihrer Ruhestellung angeordnet ist. In der Ruhestellung fluchtet der Führungskanal 46 mit dem Seilzugelement 6 bzw. mit dessen Längsrichtung 16. In Figur 18 ist in der oberen Darstellung ein Zustand gezeigt, bei welchem die Betätigungshandhabe 4 wie in Figur 17 unbetätig und damit in ihrer Ruhestellung angeordnet ist. Die untere Darstellung in Figur 18 zeigt hingegen einen Zustand, bei dem die Betätigungshandhabe 4 aus der Ruhestellung heraus bewegt und in einer der beiden Drehrichtungen 17a, 17b gedreht ist. Durch die Drehung wird das Übertragungselement 11 und damit der Führungskanal 46 um die Drehachse 12 gedreht, so dass der Führungskanal 46 außer Flucht zu dem Seilzugelement 6 gelangt. Die Drehung des Führungskanals 46 und die feste Einspannung des ersten Längsendes 8 des Seilzugelements 6 bewirken, dass der Seilzugabschnitt 45 auf das Seilzugelement 6 eine Zugkraft 28 ausübt und das Seilzugelement 6 in Richtung der Drehachse 12 bewegt wird, wodurch letztlich auf das Türschloss 5 und ggf. den Türfeststeller 7 eingewirkt wird, unabhängig davon, ob die Schiebetür 2 über die Betätigungshandhabe 4 in Öffnungsrichtung oder in Schließrichtung bewegt werden soll. Ebenso wie bei der vorherigen Ausführungsform kann auch bei dieser Ausführungsform die Reibung zwischen Führungskanal 46 und Seilzugabschnitt 45 durch Rollenpaare 47 verringert werden, die den Führungskanal 46 bilden und zwischen denen der Seilzugabschnitt 45 geführt ist, wie es in Figur 19 gezeigt ist.

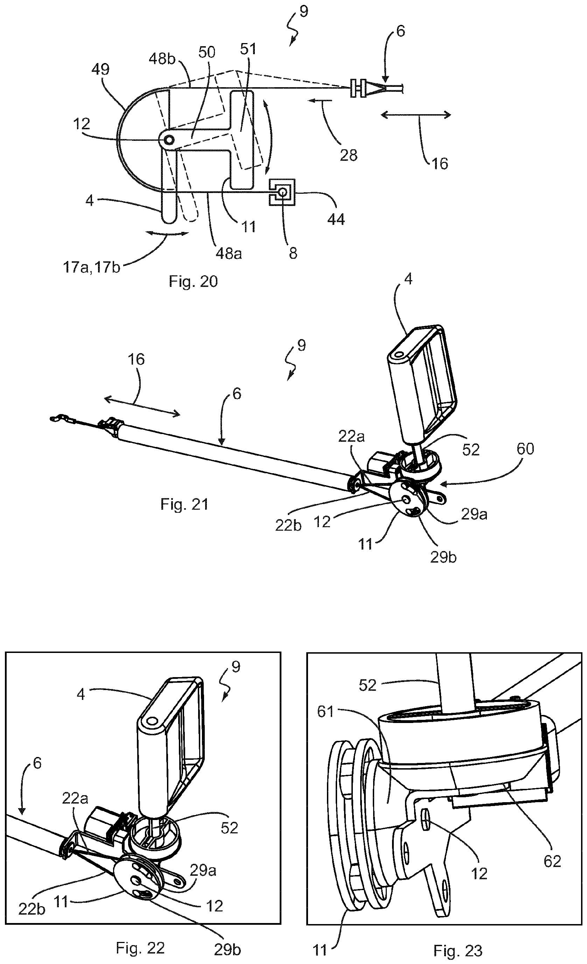

Die Figur 20 zeigt eine achte Ausführungsform der erfindungsgemäßen Betätigungsanordnung 9. Auch bei dieser Ausführungsform ist die Betätigungshandhabe 4 an dem Übertragungselement 11 angeformt, so dass bei einer Drehung der Betätigungshandhabe 4 sich das Übertragungselement 11 um die oder zusammen mit der Drehachse 12 dreht. Im Unterschied zu den bisherigen Ausführungsformen ist hier die Drehachse 12 außer Flucht zu dem Seilzugelement 6 bzw. dessen Längsrichtung 16 angeordnet. Das erste Längsende 8 des Seilzugelements 6 ist an einem ortsfesten Befestigungspunkt 44 angebracht, wobei der Befestigungspunkt 44 ein an der Schiebetür 2 oder an dem an der Schiebtür 2 befestigbaren Träger 36 ausgebildeter Punkt sein kann, der in einem Abstand zur Drehachse 12 ortsfest zu dieser angeordnet ist. Das erste Längsende 8 des Seilzugelements 6 ist um das Übertragungselement 11 herumgeführt, so dass ein erster Seilzugabschnitt 48a, welcher das erste Längsende 8 aufweist, parallel zu einem zweiten Seilzugabschnitt 48b, der mit dem eigentlichen Seilzugelement 6 verbunden ist, angeordnet ist. Dabei sorgt eine Umlaufführung 49 dafür, dass der Seilzugabschnitt 48a um das Übertragungselement 11 herumgeführt ist. Dabei verläuft der erste Seilzugabschnitt 48a nicht nur parallel zu dem zweiten Seilzugabschnitt 48b, sondern auch in entgegengesetzter Richtung zu dem zweiten Seilzugabschnitt 48b. Das Übertragungselement 11 ist bei der achten Ausführungsform als ein T-förmiges Betätigungselement 50 ausgebildet, dessen Fuß an der Drehachse 12 gelagert ist. Der kopfseitige Quersteg 51 des T-förmigen Betätigungselements 50 ist in Ruhestellung der Betätigungshandhabe 4 (durchgezogene Linien in Figur 20) quer zur Längsrichtung 16 des Seilzugelements 6 angeordnet und tritt dabei nicht mit den Seilzugabschnitten 48a und 48b in Kontakt. Erst bei Betätigung der Betätigungshandhabe 4 wird das Betätigungselement 50 um die Drehachse 12 verschwenkt und gelangt in Abhängigkeit der Drehrichtung 17a, 17b der Betätigungshandhabe 4 in Kontakt mit einem entsprechenden Seilzugabschnitt 48a oder 48b. In dem gezeigten Beispiel in Figur 20 wird die Betätigungshandhabe 4 entgegen dem Uhrzeigersinn in die Drehrichtung 17b gedreht, wodurch das Betätigungselement 50 mit dem Seilzugabschnitt 48b in Kontakt tritt und diesen Seilzugabschnitt 48b von der Drehachse 12 wegbewegt. Infolge der Festeinspannung des ersten Längsendes 8 des Seilzugelements 6 an dem Befestigungspunkt 44 wirkt auf das eigentliche Seilzugelement 6 eine Zugkraft 28, so dass an dem Seilzugelement 8 bei Betätigung der Betätigungshandhabe 8 immer gezogen wird, unabhängig davon, in welche Drehrichtung 17a oder 17b die Betätigungshandhabe 4 gedreht wird. Bei Betätigung der Betätigungshandhabe 4 wirkt das Betätigungselement folglich auf einen zugeordneten Seilzugabschnitt 48a oder 48b ein und lenkt diesen von der Drehachse 12 wegweisend aus.

Bei den zuvor besprochenen erfindungsgemäßen Ausführungsformen wird vorausgesetzt, dass die Betätigungshandhabe 4 und das Übertragungselement 11 um die gemeinsame Drehachse 12 sich drehen, wobei die Drehachse 12 an einem an der Schiebetür 2 befestigbaren Träger 36 oder aber direkt an der Schiebetür 2 drehbar gelagert ist. Dabei ist die Drehachse 12 dann horizontal verlaufend angeordnet. Es können aber auch nicht zur Erfindung gehörende Einbausituationen vorliegen, bei denen die Betätigungshandhabe 4 um eine andere Achse dreht als das Übertragungselement 11. Eine solche Einbausituation ist in den Figuren 21 bis 23 gezeigt, welche eine nicht zur Erfindung gehörende neunte Ausführungsform der Betätigungsanordnung 9 darstellt. Bei der neunten Ausführungsform ist die Betätigungshandhabe 4 drehfest mit einer vertikal verlaufend angeordneten Achse 52 verbunden, wohingegen die Drehachse 12, die drehfest mit dem Übertragungselement 11 verbunden ist, horizontal verlaufend angeordnet ist. Ferner sind an dem ersten Längsende 8 des Seilzugelements 6 zwei Seilzugstränge 22a und 22b angebracht, die in in dem Übertragungselement 11 ausgebildeten Langlöchern 29a, 29b bewegbar gehalten sind. Mit Ausnahme der an dem Übertragungselement 11 befestigten Betätigungshandhabe 4 entspricht das Übertragungselement 11 dem Übertragungselement 11 der vierten Ausführungsform, die in den Figuren 7 bis 9 gezeigt ist, so dass auf die entsprechende Beschreibung für das Übertragungselement 11 mit seinen Langlöchern im Zusammenwirken mit dem Seilzugelement 6 verwiesen sei, um Wiederholungen zu vermeiden. Im Übrigen ist die Funktion der neunten Ausführungsform im Wesentlichen identisch zu der Wirkungsweise der vierten Ausführungsform. Einziger Unterschied ist die Übertragung der Drehung der Betätigungshandhabe 4 auf das Übertragungselement 11. Bei der neunten Ausführungsform sind die Betätigungshandhabe 4 und das Übertragungselement 11 nicht drehfest miteinander verbunden, sondern über ein Kegelradgetriebe 60 miteinander bewegungsgekoppelt, um die Drehbetätigung der Betätigungshandhabe 4 (Drehrichtungen 17a, 17b) auf das Seilzugelement 6 zu übertragen. Zu diesem Zweck weist das Übertragungselement 11 ein Ritzel 61 auf, das mit einem endseitig der Achse 52 angeformten Tellerrad 62 in Eingriff steht. Auf diese Weise wird die Drehbewegung der Betätigungshandhabe 4 über die Achse 52 und das Tellerrad 62 auf das Ritzel 61 und das Übertragungselement 11 übertragen, so dass eine Drehbewegung der Betätigungshandhabe 4 immer zu einer Zugbewegung an dem Seilzugelement 6 führt.

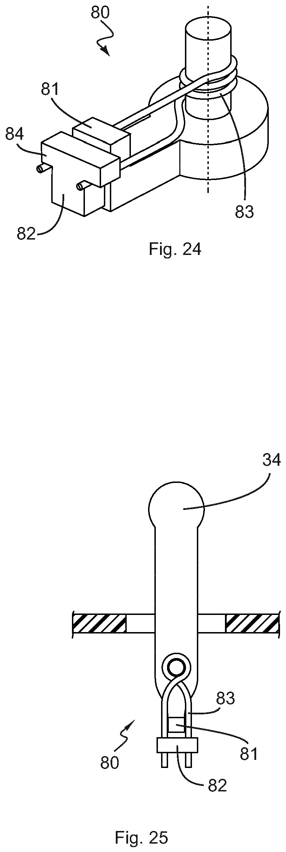

In den Figuren 24 und 25 ist für die zuvor beschriebenen Ausführungsformen eine mechanische Möglichkeit aufgezeigt, die eine Rückstellung der Betätigungshandhabe 4 aus der ersten oder zweiten Betriebsstellung zurück in die Ruhestellung bewirkt. Diese Möglichkeit ist in Form eines Rückstellmittels 80 ausgebildet, welches eine Rückstellkraft aufbaut, wenn die Betätigungshandhabe 4 aus der Ruhestellung bewegt wird. Das in Figur 24 gezeigte Rückstellmittel 80 umfasst ein erstes Lagerelement 81, ein zweites Lagerelement 82 und ein elastisches Rückstellglied 83. Das erste Lagerelement 81 ist mit der Betätigungshandhabe 4 bewegungsgekoppelt und wird folglich bei Betätigung der Betätigungshandhabe 4 aus deren Ruhestellung mitbewegt. Dabei kann das erste Lagerelement 81 entweder direkt an der Betätigungshandhabe 4 oder aber an dem Übertragungselement 11, wie es beispielsweise in den Figuren 4 bis 6 gezeigt ist, angebracht sein, wohingegen das zweite Lagerelement 82 an ortsfesten Bauteil der Betätigungsanordnung 9 fixiert ist. In den Figuren 24 und 25 nehmen das erste Lagerelement 81 und das zweite Lagerelement 82 eine Position ein, bei welcher die Betätigungshandhabe 4 in ihrer Ruhestellung angeordnet ist. Bei Betätigung der Betätigungshandhabe 4 dreht sich das erste Lagerelement 81 mit und bewegt sich folglich von dem zweiten Lagerelement 82 fort, was dazu führt, dass die beiden Schenkel des in Form eines Federelements ausgebildeten Betätigungsgliedes 83 gespreizt werden, wodurch eine Rückstellkraft aufgebracht wird, die das erste Lagerelement 81 in seine Ausgangsstellung (siehe Figur 24) zurückdrängt. Das in Figur 24 gezeigte Rückstellmittel 80 kann bei den Ausführungsformen der Figuren 2 bis 23 zum Einsatz kommen, wobei Figur 25 eine leichte Abwandlung zeigt, die insbesondere für die Ausführungsformen der Figuren 10 bis 13 von Bedeutung ist. Denn bei diesen Ausführungsformen kann das Rückstellmittel 80 mit dem Betätigungshebel 34 zusammenwirken, indem das erste Lagerelement 81 an dem Betätigungshebel 34 angebracht ist und sich die Schenkel des Rückstellgliedes 83 an dem zweiten, ortsfesten Lagerelement 82 abstützen. Das Rückstellmittel 80 dient folglich zur Rückstellung der Betätigungshandhabe 4 in die nicht betätigte Ruhestellung. Damit die Schenkel des Rückstellgliedes 83 nicht an den Lagerelementen 81, 82 abrutschen können, ist wenigstens eines der beiden Lagerelemente 81, 82 T-förmig ausgebildet, so dass die Schenkel des Rückstellgliedes 83 unterhalb des Kopfsteges 84 des T-förmig ausgebildeten Lagerelements 81, 82 verlaufen. In den Figuren 24 und 25 ist das zweite Lagerelement 82 T-förmig ausgebildet, wobei es auch denkbar ist, dass beide Lagerelement 81, 82 oder nur das erste Lagerelemente 81 T-förmig ausgebildet sind.

Zusammenfassend ist vorstehend eine Betätigungsanordnung 9 in verschiedensten Ausführungsformen beschrieben worden. Mit Ausnahme der achten Ausführungsform ist bei den anderen Ausführungsformen in Ruhigstellung der Betätigungshandhabe 4 die Drehachse 12 in Flucht liegend zu der Längsrichtung 16 des Seilzugelements 6 angeordnet, wobei bei Betätigung der Betätigungshandhabe 4 ein Abschnitt des ersten Längsendes 8 des Seilzugelements 6 außer Flucht zu der Längsrichtung 16 gelangt, wodurch eine Zugkraft auf das Seilzugelement 6 wirkt, die in Richtung der Drehachse 12 gerichtet ist.

## Patentansprüche

1. Betätigungsanordnung (9) für ein Türschloss (5) einer Schiebetür (2) eines Kraftfahrzeugs (1), aufweisend:
ein an der Schiebetür (2) anbringbares Übertragungselement (11), welches an einer Drehachse (12) drehfest angebracht ist,
eine Betätigungshandhabe (4), die aus einer Ruhestellung durch Drehung in eine erste Drehrichtung (17a) in eine erste Betriebsstellung drehbar ist, und
ein nach Art eines Bowdenzugs ausgebildetes und sich zumindest abschnittsweise in eine Längsrichtung (16) erstreckendes Seilzugelement (6), welches ein erstes Längsende (8) und ein zweites Längsende (10), das mit dem Türschloss (5) der Schiebetür (2) koppelbar ist, aufweist,
wobei das Übertragungselement (11) mit dem ersten Längsende (8) des Seilzugelements (6) derart bewegungsgekoppelt ist, dass eine rotatorische Drehbewegung der Betätigungshandhabe (4) in die erste Drehrichtung (17a) das Seilzugelement (6) translatorisch in Richtung der Drehachse (12) in eine Betätigungsposition, in welcher das Seilzugelement (6) auf das Türschloss (5) einwirken kann, bewegt,
wobei die Betätigungshandhabe (4) aus der Ruhestellung durch Drehung in eine zweite Drehrichtung (17b) in eine zweite Betriebsstellung drehbar ist,
wobei das Übertragungselement (11) mit dem ersten Längsende (8) des Seilzugelements (6) derart bewegungsgekoppelt ist, dass eine rotatorische Drehbewegung der Betätigungshandhabe (4) in die zweite Drehrichtung (17b), die der ersten Drehrichtung (17a) entgegengesetzt ist, das Seilzugelement (6) translatorisch in Richtung der Drehachse (12) in die Betätigungsposition bewegt,
**dadurch gekennzeichnet, dass** die Betätigungshandhabe (4) an dem Übertragungselement (11) befestigt ist und zusammen mit dem Übertragungselement (11) um die Drehachse (12) drehbar ist.

2. Betätigungsanordnung (9) nach Anspruch 1, **dadurch gekennzeichnet, dass** die Betätigungshandhabe (4) mit Hilfe eines Rückstellmittels (80) aus der ersten oder zweiten Betriebsstellung in die Ruhestellung zurückbewegbar ist, wobei das Rückstellmittel (80) ein erstes Lagerelement (81), welches mit der Betätigungshandhabe (4) bewegungsgekoppelt ist, ein zweites Lagerelement (82), welches ortsfest zu dem ersten Lagerelement (81) an der Betätigungsanordnung (9) angeordnet ist, und ein elastisches Rückstellglied (83) aufweist, welches an einem der beiden Lagerelemente (81, 82) befestigt ist und sich an dem anderen Lagerelement (81, 82) abstützt.

3. Betätigungsanordnung (9) nach Anspruch 2 **dadurch gekennzeichnet, dass** das Rückstellglied (83) ein Federelement ist, welches bei einer Drehung der Betätigungshandhabe (4) aus der Ruhestellung eine Rückstellkraft aufbringt.

4. Betätigungsanordnung (9) nach einem der Ansprüche 1 bis 3, **dadurch gekennzeichnet, dass** das erste Längsende (8) des Seilzugelements (6) an einem in einem Abstand (15) zur Drehachse (12) angeordneten und an dem Übertragungselement (11) ausgebildeten Befestigungspunkt (14) befestigt ist, der mit dem Übertragungselement (11) um die Drehachse (12) drehbar ist.

5. Betätigungsanordnung (9) nach einem der Ansprüche 1 bis 3, **dadurch gekennzeichnet, dass** das erste Längsende (8) des Seilzugelements (6) zweisträngig ausgebildet ist,
wobei ein erster Seilzugstrang (22a) des ersten Längsendes (8) des Seilzugelements (6) mit einer in einem Abstand (23a) zur Drehachse (12) angeordneten und an dem Übertragungselement (11) ausgebildeten ersten Befestigungseinrichtung (24a) befestigt ist,
wobei ein zweiter Seilzugstrang (22b) des ersten Längsendes (8) des Seilzugelements (6) mit einer in einem Abstand (23b) zur Drehachse (12) angeordneten und an dem Übertragungselement (11) ausgebildeten zweiten Befestigungseinrichtung (24b) befestigt ist,
wobei die erste Befestigungseinrichtung (24a) und die zweite Befestigungseinrichtung (24b) mit Bezug auf die Drehachse (12) unter einem vorgegebenen Winkel (25) zueinander versetzt angeordnet sind, und
wobei bei in Ruhestellung angeordneter Betätigungshandhabe (4) eine Winkelhalbierende (26) des Winkels (25) mit der Längsrichtung (16) des Seilzugselements (6) fluchtet.

6. Betätigungsanordnung (9) nach Anspruch 5, **dadurch gekennzeichnet, dass** die erste Befestigungseinrichtung (24a) und die zweite Befestigungseinrichtung (24b) als jeweiliges Langloch (29) ausgebildet sind, in welchem das jeweilige vom Seilzugelement (6) wegweisende Seilstrangende (30a, 30b) des ersten und zweiten Seilzugstrangs (22a, 22b) bewegbar gehalten ist.

7. Betätigungsanordnung (9) nach Anspruch 5 oder 6, **dadurch gekennzeichnet, dass** der erste Seilzugstrang (24a) und der zweite Seilzugstrang (24b) zwischen Führungselementen (31) verlaufend angeordnet sind.

8. Betätigungsanordnung (9) nach einem der Ansprüche 1 bis 3, **dadurch gekennzeichnet, dass** das erste Längsende (8) des Seilzugelements (6) an einem in einem Abstand zur Drehachse (12) angeordneten und mit Bezug auf die Betätigungshandhabe (4) ortsfesten Befestigungspunkt (44) befestigt ist.

9. Betätigungsanordnung (9) nach Anspruch 8, **dadurch gekennzeichnet, dass** das Übertragungselement (11) einen geradlinig verlaufend ausgebildeten Führungskanal (46) aufweist, in welchem ein Seilabschnitt (45) des Seilzugelements (6) angeordnet ist, wobei bei in Ruhestellung angeordneter Betätigungshandhabe (4) der Führungskanal (46) mit der Längsrichtung (16) des Seilzugselements (6) fluchtet.

10. Betätigungsanordnung (9) nach Anspruch 9, **dadurch gekennzeichnet, dass** der Führungskanal (46) von wenigstens einem Rollenpaar (47) gebildet ist, zwischen denen der Seilabschnitt (45) des Seilzugelements (6) verläuft.

11. Betätigungsanordnung (9) nach Anspruch 8, **dadurch gekennzeichnet, dass** das Seilzugelement (6) um die Drehachse (12) und um das Übertragungselement (11) derart herumgeführt angeordnet ist, dass ein das erste Längsende (8) aufweisender Seilzugabschnitt (48a) parallel sowie in entgegengesetzter Längsrichtung (16) des Seilzugelements (6) verlaufend zu dem auf der gegenüberliegenden Seite des Übertragungselements (11) in Längsrichtung (16) verlaufenden, zweiten Seilzugabschnitt (48b) angeordnet ist, wobei das Übertragungselement (11) ein T-förmig ausgebildetes Betätigungselement (50) aufweist, das bei in Ruhestellung angeordneter Betätigungshandhabe (4) zwischen den Seilzugabschnitten (48a, 48b) liegend angeordnet ist und bei Betätigung der Betätigungshandhabe (4) auf einen zugeordneten Seilzugabschnitt (48a, 48b) einwirkt und diesen von der Drehachse (12) wegweisend auslenkt.

12. Betätigungsanordnung (9) nach einem der Ansprüche 1 bis 3, **dadurch gekennzeichnet, dass** die Drehachse (12) an einem an der Schiebetür (2) befestigbaren Träger (36) drehbar gelagert ist.

13. Betätigungsanordnung (9) nach einem der Ansprüche 1 bis 3 oder 12, **dadurch gekennzeichnet, dass** das erste Längsende (8) des Seilzugelements (6) an einem translatorisch und in Längsrichtung (16) des Seilzugelements (6) bewegbar gelagerten Schieberelement (32) befestigt ist, welches mit dem Übertragungselement (11) bewegungsgekoppelt ist.

14. Betätigungsanordnung (9) nach Anspruch 13, **dadurch gekennzeichnet, dass** die Drehachse (12) durch ein in dem Schieberelement (32) ausgebildetes Langloch (33) hindurchgeführt angeordnet ist und einen beidseitig von der Drehachse (12) radial erstreckenden Betätigungshebel (34) aufweist, der bei Betätigung der Betätigungshandhabe (4) in Anlage an eine an dem Schieberelement (32) angeformte Anschlagfläche (35) gelangt und das Schieberelement (32) relativ zu der Drehachse (12) in Längsrichtung (16) des Seilzugelements (6) verschiebt.

15. Betätigungsanordnung (9) nach Anspruch 13 oder 14, **dadurch gekennzeichnet, dass** das Schieberelement (32) über ein elastisches Rückstellelement (37) mit dem Träger (36) gekoppelt ist.

16. Betätigungsanordnung (9) nach Anspruch 12, **dadurch gekennzeichnet, dass** das erste Längsende (8) des Seilzugelements (6) als Seilschlaufe (39) ausgebildet ist, die an einer an dem Träger (36) angeformten Halterung (40) eingehakt ist, wobei das Übertragungselement (11) einen beidseitig von der Drehachse (12) radial erstreckenden Auslenkhebel (42) aufweist, um den herum die Seilschlaufe (39) geführt ist, wobei bei Betätigung der Betätigungshandhabe (4) der Auslenkhebel (42) abschnittsweise in Anlage an die Seilschlaufe (39) gelangt und diese abschnittsweise von der Drehachse (12) wegbewegt.

17. Betätigungsanordnung (9) nach Anspruch 16, **dadurch gekennzeichnet, dass** der Auslenkhebel (42) drehgelagerte Rollen (43) aufweist, welche bei Betätigung der Betätigungshandhabe (4) abschnittsweise in Anlage an die Seilschlaufe (39) gelangen.

18. Betätigungsanordnung (9) nach einem der Ansprüche 1 bis 3, **dadurch gekennzeichnet, dass** das erste Längsende (8) des Seilzugelements (6) als Seilschlaufe (18) ausgebildet ist, wobei das Übertragungselement (11) einen scheibenförmig ausgebildeten Grundkörper (19) umfasst, durch dessen Zentrum die Drehachse (12) verläuft und in dessen kreisförmiger Umfangswandung (20) eine Aufnahmeausnehmung (21) ausgebildet ist, in welcher die Seilschlaufe (18) abschnittsweise aufgenommen ist.

19. Betätigungsanordnung (9) nach einem der vorhergehenden Ansprüche, **dadurch gekennzeichnet, dass** die Drehachse (12) horizontal verlaufend angeordnet ist.

## Claims

1. An actuation arrangement (9) for a door lock (5) of a sliding door (2) of a motor vehicle (1), comprising:
a transmission element (11), which can be attached to the sliding door (2) and is attached in a non-rotatable manner to an axis of rotation (12),
an actuation handle (4) which can be rotated from a rest position, by rotation in a first direction of rotation (17a), into a first operating position, and
a cable pull element (6), which is designed in the manner of a Bowden cable, and extends at least sectionally in a longitudinal direction (16), and which has a first longitudinal end (8) and a second longitudinal end (10), which can be coupled to the door lock (5) of the sliding door (2), wherein
the transmission element (11) is coupled in terms of movement to the first longitudinal end (8) of the cable pull element (6), in such a way that a rotational movement of the actuation handle (4) in the first direction of rotation (17a) moves the cable pull element (6) in a translational manner in the direction of the axis of rotation (12) into an actuating position, in which the cable pull element (6) can act on the door lock (5), wherein
the actuation handle (4) can be rotated from the rest position by rotation in a second direction of rotation (17b) into a second operating position, wherein
the transmission element (11) is coupled in terms of movement to the first longitudinal end (8) of the cable pull element (6), in such a way that a rotational movement of the actuation handle (4) in the second direction of rotation (17b), which is opposite to the first direction of rotation (17a), moves the cable pull element (6) in a translational manner in the direction of the axis of rotation (12), into the actuating position,
**characterised in that**, the operating handle (4) is fixed to the transmission element (11) and can be rotated about the axis of rotation (12) together with the transmission element (11).

2. The actuation arrangement (9) in accordance with claim 1, **characterised in that**, the actuation handle (4) can be moved back from the first or second operating position into the rest position with the aid of a restoring means (80), wherein the restoring means (80) comprises a first bearing element (81), which is coupled in terms of movement to the actuation handle (4), a second bearing element (82), which is arranged fixedly on the actuation arrangement (9) with respect to the first bearing element (81), and an elastic restoring member (83), which is attached to one of the two bearing elements (81, 82), and supported on the other bearing element (81, 82).

3. The actuation arrangement (9) in accordance with claim 2, **characterised in that**, the restoring member (83) is a spring element, which applies a restoring force upon rotation of the actuation handle (4) from the rest position.

4. The actuation arrangement (9) in accordance with one of the claims 1 to 3, **characterised in that**, the first longitudinal end (8) of the cable pull element (6) is fastened to a fastening point (14), which is arranged at a distance (15) from the axis of rotation (12), is designed on the transmission element (11), and which can rotate with the transmission element (11) about the axis of rotation (12).

5. The actuation arrangement (9) in accordance with one of the claims 1 to 3, **characterised in that**, the first longitudinal end (8) of the cable pull element (6) is designed in two strands, wherein
a first cable pull strand (22a) of the first longitudinal end (8) of the cable pull element (6) is fastened with a first fastening device (24a), arranged at a distance (23a) from the axis of rotation (12), and designed on the transmission element (11), wherein
a second cable pull strand (22b) of the first longitudinal end (8) of the cable pull element (6) is fastened with a second fastening device (24b) arranged at a distance (23b) from the axis of rotation (12) and designed on the transmission element (11), wherein
the first fastening device (24a) and the second fastening device (24b) are arranged offset with respect to the axis of rotation (12) at a predetermined angle (25) with respect to one another, and wherein
with the actuation handle (4) arranged in the rest position, an angle bisector (26) of the angle (25) is aligned with the longitudinal direction (16) of the cable pull element (6).

6. The actuation arrangement (9) in accordance with claim 5, **characterised in that**, the first fastening device (24a) and the second fastening device (24b) are designed as respective elongated holes (29), in which the respective cable strand ends (30a, 30b) of the first and second cable strands (22a, 22b), pointing away from the cable pull element (6), are movably held.

7. The actuation arrangement (9) in accordance with claim 5 or 6, **characterised in that**, the first cable pull strand (24a) and the second cable pull strand (24b) are arranged extending between guide elements (31).

8. The actuation arrangement (9) in accordance with one of the claims 1 to 3, **characterised in that**, the first longitudinal end (8) of the cable pull element (6) is fastened to a fastening point (44), which is arranged at a distance from the axis of rotation (12) and is fixed with respect to the actuation handle (4).

9. The actuation arrangement (9) in accordance with claim 8, **characterised in that**, the transmission element (11) has a guide channel (46) of a linear extending design, in which a cable section (45) of the cable pull element (6) is arranged, wherein with the actuation handle (4) arranged in the rest position, the guide channel (46) is aligned with the longitudinal direction (16) of the cable pull element (6).

10. The actuation arrangement (9) in accordance with claim 9, **characterised in that**, the guide channel (46) is formed by at least one pair of rollers (47), between which the cable section (45) of the cable pull element (6) extends.

11. The actuation arrangement (9) in accordance with claim 8, **characterised in that**, the cable pull element (6) is arranged so as to be guided around the axis of rotation (12) and around the transmission element (11) in such a way that a cable pull section (48a) having the first longitudinal end (8) is arranged parallel, and extending in the opposite longitudinal direction (16) of the cable pull element (6), to the second cable pull section (48b), extending in the longitudinal direction (16) on the opposite side of the transmission element (11), wherein the transmission element (11) has an actuating element (50) of T-shaped design, which is arranged located between the cable pull sections (48a, 48b) when the actuation handle (4) is arranged in the rest position and acts on an associated cable pull section (48a, 48b), and deflects the latter away from the axis of rotation (12), when the actuation handle (4) is actuated.

12. The actuation arrangement (9) in accordance with one of the claims 1 to 3, **characterised in that**, the axis of rotation (12) is mounted such that it can rotate on a carrier (36), which can be fastened to the sliding door (2).

13. The actuation arrangement (9) in accordance with one of the claims 1 to 3 or 12, **characterised in that**, the first longitudinal end (8) of the cable pull element (6) is fastened to a sliding element (32) which is mounted in a translational manner, and can move in the longitudinal direction (16) of the cable pull element (6), and which is coupled in terms of movement to the transmission element (11) .

14. The actuation arrangement (9) in accordance with claim 13, **characterised in that**, the axis of rotation (12) is arranged so as to pass through an elongated hole (33) designed in the sliding element (32), and has an actuating lever (34), which extends radially on both sides from the axis of rotation (12), and which, when the actuation handle (4) is actuated, comes into contact with a stop face (35) integrally formed on the sliding element (32), and displaces the sliding element (32) relative to the axis of rotation (12), in the longitudinal direction (16) of the cable pull element (6).

15. The actuation arrangement (9) in accordance with claim 13 or 14, **characterised in that**, the sliding element (32) is coupled to the carrier (36) via an elastic restoring element (37).

16. The actuation arrangement (9) in accordance with claim 12, **characterised in that**, the first longitudinal end (8) of the cable pull element (6) is designed as a cable loop (39), which is hooked onto a holder (40) integrally formed on the carrier (36), wherein the transmission element (11) has a deflection lever (42), which extends radially on both sides from the axis of rotation (12), and around which the cable loop (39) is guided, wherein when the actuation handle (4) is actuated, the deflection lever (42) comes into contact sectionally with the cable loop (39) and moves the latter sectionally away from the axis of rotation (12).

17. The actuation arrangement (9) in accordance with claim 16, **characterised in that**, the deflection lever (42) has rotationally mounted rollers (43), which, when the actuation handle (4) is actuated, come into contact sectionally with the cable loop (39) .

18. The actuation arrangement (9) in accordance with one of the claims 1 to 3, **characterised in that**, the first longitudinal end (8) of the cable pull element (6) is designed as a cable loop (18), wherein the transmission element (11) comprises a base body (19) of disk-shaped design, through the centre of which the axis of rotation (12) extends, and in the circular circumferential wall (20) of which a receiving recess (21) is designed, in which the cable loop (18) is sectionally received.

19. The actuation arrangement (9) in accordance with one of the preceding claims, **characterised in that**, the axis of rotation (12) is arranged extending horizontally.

## Revendications

1. Système d'actionnement (9) pour une serrure de porte (5) d'une porte coulissante (2) d'un véhicule automobile (1), comportant :
un élément de transmission (11) montable sur la porte coulissante (2), lequel est monté solidaire en rotation sur un axe de rotation (12),
une manette de manoeuvre (4), laquelle peut être tournée d'une position de repos par rotation dans un premier sens de rotation (17a) dans une première position de fonctionnement, et
un élément de câble (6) constitué à la façon d'un câble Bowden et s'étendant au moins par tronçon dans une direction longitudinale (16), lequel comporte une première extrémité (8) et une deuxième extrémité (10), qui peuvent être couplées à la serrure de porte (5) de la porte coulissante (2),
l'élément de transmission (11) étant couplé en mouvement avec la première extrémité longitudinale (8) de l'élément de câble (6) de telle sorte qu'un mouvement de rotation rotatif de la manette de manoeuvre (4) dans la première direction de rotation (17a) déplace l'élément de câble (6) de façon translatoire en direction de l'axe de rotation (12) dans une position d'actionnement, dans laquelle l'élément de câble (6) peut agir sur la serrure de porte (5),
la manette de manoeuvre (4) pouvant être tournée dans une deuxième position de fonctionnement depuis la position de repos par rotation dans une deuxième direction de rotation (17b),
l'élément de transmission (11) étant couplé en mouvement à la première extrémité longitudinale (8) de l'élément de câble (6) de telle sorte qu'un mouvement de rotation rotatoire de la manette de manoeuvre (4) dans la deuxième direction de rotation (17b), qui est opposée à la première direction de rotation (17a), déplace l'élément de câble (6) de façon translatoire en direction de l'axe de rotation (12) dans la position d'actionnement,
**caractérisé en ce que** la manette de manoeuvre (4) est fixée à l'élément de transmission (11) et peut être tournée conjointement avec l'élément de transmission (11) autour de l'axe de rotation (12) .

2. Système d'actionnement (9) selon la revendication 1, **caractérisé en ce que** la manette de manoeuvre (4) peut être mobile en arrière à l'aide d'un moyen de rappel (80) de la première ou deuxième position de fonctionnement dans la position de repos, le moyen de rappel (80) comportant un premier élément d'appui (81), lequel est couplé en mouvement avec la manette de manoeuvre (4), un deuxième élément d'appui (82), lequel est disposé fixement par rapport au premier élément d'appui (81) sur le système d'actionnement (9), et un organe de rappel élastique (83), lequel est fixé sur un des deux éléments d'appui (81, 82) et s'appuie sur l'autre élément d'appui (81, 82).

3. Système d'actionnement (9) selon la revendication 2, **caractérisé en ce que** l'organe de rappel (83) est un élément à ressort, lequel à une rotation de la manette de manoeuvre (4) applique une force de rappel depuis la position de repos.

4. Système d'actionnement (9) selon l'une quelconque des revendications 1 à 3, **caractérisé en ce que** la première extrémité longitudinale (8) de l'élément de câble (6) est fixée à un point de fixation (14) disposé à une distance (15) de l'axe de rotation (12) et constitué sur l'élément de transmission (11), qui peut tourner avec l'élément de transmission (11) autour de l'axe de rotation (12) .

5. Système d'actionnement (9) selon l'une quelconque des revendications 1 à 3, **caractérisé en ce que** la première extrémité longitudinale (8) de l'élément de câble (6) est constitué à deux brins,
un premier brin de câble (22a) de la première extrémité longitudinale (8) de l'élément de câble (6) étant fixé à un premier dispositif de fixation (24a) disposé à une distance (23a) de l'axe de rotation (12) et constitué sur l'élément de transmission (11),
un deuxième brin de câble (22b) de la première extrémité longitudinale (8) de l'élément de câble (6) étant fixé à un deuxième dispositif de fixation (24b) disposé à une distance (23b) de l'axe de rotation (12) et constitué sur l'élément de transmission (11),
le premier dispositif de fixation (24a) et le deuxième dispositif de fixation (24b) étant disposés décalés l'un par rapport à l'autre eu égard à l'axe de rotation (12) sous un angle prédéfini (25), et
une bissectrice (26) de l'angle (25) étant alignée avec la direction longitudinale (16) de l'élément de câble (6) avec la manette de manoeuvre (4) disposée en position de repos.

6. Système d'actionnement (9) selon la revendication 5, **caractérisé en ce que** le premier dispositif de fixation (24a) et le deuxième dispositif de fixation (24b) sont constitués respectivement sous la forme d'un trou oblong (29) dans lequel est maintenue mobile l'extrémité de brin de câble respective (30a, 30b) s'éloignant de l'élément de câble (6) du premier et du deuxième brin de câble (22a, 22b).

7. Système d'actionnement (9) selon la revendication 5 ou 6, **caractérisé en ce que** le premier brin de câble (24a) et le deuxième brin de câble (24b) sont disposés passant entre les éléments de guidage (31).

8. Système d'actionnement (9) selon l'une quelconque des revendications 1 à 3, **caractérisé en ce que** la première extrémité longitudinale (8) de l'élément de câble (6) est fixée à un point de fixation (44) disposé à une distance de l'axe de rotation (12) et fixe eu égard à la manette de manoeuvre (4).

9. Système d'actionnement (9) selon la revendication 8, **caractérisé en ce que** l'élément de transmission (11) comporte un conduit de guidage (46) constitué passant en ligne droite, dans lequel est disposé un tronçon de câble (45) de l'élément de câble (6), le conduit de guidage (46) étant aligné avec la direction longitudinale (16) de l'élément de câble (6) avec la manette de manoeuvre (4) disposée en position de repos.

10. Système d'actionnement (9) selon la revendication 9, **caractérisé en ce que** le conduit de guidage (46) est formé par au moins une paire de galets (47) entre lesquels passe le tronçon de câble (45) de l'élément à câble (6).

11. Système d'actionnement (9) selon la revendication 8, **caractérisé en ce que** l'élément de câble (6) est disposé guidé autour de l'axe de rotation (12) et autour de l'élément de transmission (11) de telle sorte qu'un tronçon de câble (48a) comportant la première extrémité longitudinale (8) est disposé passant parallèlement et en direction longitudinale (16) opposée de l'élément de câble (6) par rapport au deuxième tronçon de câble (48b) passant sur le côté opposé de l'élément de transmission (11) en direction longitudinale (16), l'élément de transmission (11) comportant un élément d'actionnement (50) constitué en forme de T, qui est disposé horizontalement entre les tronçons de câble (48a, 48b) et agit sur un tronçon de câble (48a, 48b) attribué en actionnant la manette de manoeuvre (4) et dévie celui-ci en éloignement de l'axe de rotation (12).

12. Système d'actionnement (9) selon l'une quelconque des revendications 1 à 3, **caractérisé en ce que** l'axe de rotation (12) est logé pouvant tourner sur un support (36) fixable sur la porte coulissante (2).

13. Système d'actionnement (9) selon l'une quelconque des revendications 1 à 3 ou 12, **caractérisé en ce que** la première extrémité longitudinale (8) de l'élément de câble (6) est fixée à un élément à coulisse (32) de façon translatoire et logée mobile dans la direction longitudinale (16) de l'élément de câble (6), lequel est couplé en mouvement à l'élément de transmission (11).

14. Système d'actionnement (9) selon la revendication 13, **caractérisé en ce que** l'axe de rotation (12) est disposé guidé à travers un trou oblong (33) constitué dans l'élément à coulisse (32) et comporte un levier de commande (34) s'étendant radialement des deux côtés de l'axe de rotation (12), qui parvient en actionnant la manette de manoeuvre (4) en appui sur une surface de butée (35) conformée sur l'élément à coulisse (32) et l'élément à coulisse (32) se déplace par rapport à l'axe de rotation (12) en direction longitudinale (16) de l'élément de câble (6).

15. Système d'actionnement (9) selon la revendication 13 ou 14, **caractérisé en ce que** l'élément à coulisse (32) est couplé au support (36) par un élément de rappel élastique (37).

16. Système d'actionnement (9) selon la revendication 12, **caractérisé en ce que** la première extrémité longitudinale (8) de l'élément de câble (6) est constituée comme une boucle de câble (39), qui est accrochée à une fixation (40) conformée sur le support (36), l'élément de transmission (11) comportant un levier de déplacement (42) s'étendant radialement des deux côtés de l'axe de rotation (12) autour duquel est guidée la boucle de câble (39), le levier de déplacement (42) parvenant par tronçon en appui sur la boucle de câble (39) lorsqu'on actionne la manette de manoeuvre (4) et éloignant celle-ci par tronçon de l'axe de rotation (12).

17. Système d'actionnement (9) selon la revendication 16, **caractérisé en ce que** le levier de déplacement (42) comporte des galets (43) logés en rotation, lesquels parviennent par section en appui sur la boucle de câble (39) lorsqu'on actionne la manette de manoeuvre (4).

18. Système d'actionnement (9) selon l'une quelconque des revendications 1 à 3, **caractérisé en ce que** la première extrémité longitudinale (8) de l'élément de câble (6) est constituée comme une boucle de câble (18), l'élément de transmission (11) comprenant un corps de base (19) constitué en forme de disque à travers le centre duquel passe l'axe de rotation (12) et dans la paroi périphérique (20) circulaire duquel est constitué un évidement de logement (21) dans lequel la boucle de câble (18) est reçue par tronçon.

19. Système d'actionnement (9) selon l'une quelconque des revendications précédentes, **caractérisé en ce que** l'axe de rotation (12) est disposé dans le sens horizontal.
